# EUROPEAN PATENT APPLICATION

(11) **EP 2 738 842 A1**
(43) Date of publication of application: **04.06.2014**
(21) Application number: 12819797.7
(22) Date of filing: 27.07.2012
(51) Int. Cl.: H01M 4/48, C01B 31/02, H01M 4/36, H01M 4/587

(54) **METHOD FOR PRODUCING CARBON MATERIAL FOR LITHIUM ION SECONDARY BATTERIES, CARBON MATERIAL FOR LITHIUM ION SECONDARY BATTERIES, NEGATIVE ELECTRODE ACTIVE MATERIAL FOR LITHIUM ION SECONDARY BATTERIES, COMPOSITION, CARBON COMPOSITE MATERIAL FOR NEGATIVE ELECTRODES OF LITHIUM ION SECONDARY BATTERIES, NEGATIVE ELECTRODE MIXTURE FOR LITHIUM ION SECONDARY BATTERIES, NEGATIVE ELECTRODE FOR LITHIUM ION SECONDARY BATTERIES, AND LITHIUM ION SECONDARY BATTERY**

(30) Priority: 29.07.2011 JP 2011166629; 29.07.2011 JP 2011167207; 29.09.2011 JP 2011214531
(71) Applicant: Sumitomo Bakelite Co., Ltd., Shinagawa-ku Tokyo 140-0002 (JP)
(72) Inventor: TAKEUCHI, Takeshi, Tokyo 140-0002 (JP); SAWAYAMA, Yosuke, Tokyo 140-0002 (JP)
(74) Representative: Schollweck, Susanne
(86) International application number: PCT/JP2012/069221
(87) International publication number: WO 2013/018721

(57) **Abstract**

Provided are a carbon material for lithium ion secondary batteries, a negative electrode compound for lithium ion secondary batteries, a negative electrode for lithium ion secondary batteries, and a lithium ion secondary battery which can provide lithium ion secondary batteries having a further improved charge and discharge capacity density and further improved charge and discharge cycle characteristics. A method for manufacturing the lithium ion secondary batteries includes a mixing step of mixing a phenol resin and a resin composition containing silica particles so as to obtain a mixture, a spraying step of spraying the mixture obtained in the mixing step so as to form liquid droplets, a first thermal treatment step of carrying out a first thermal treatment on the liquid droplets obtained in the spraying step so as to generate a carbon precursor, and a second thermal treatment step of carrying out a second thermal treatment, which is carried out at a higher temperature than the first thermal treatment, on the carbon precursor obtained in the first thermal treatment step so as to generate a carbon material containing carbon and silicon oxide represented by SiOx (0<X<2).

## Description

### Technical Field

The present invention relates to a method for manufacturing a carbon material for lithium ion secondary batteries, a carbon material for lithium ion secondary batteries, a negative electrode material for lithium ion secondary batteries, a negative electrode active material for lithium ion secondary batteries, a composition, a carbon composite for negative electrode materials of lithium ion secondary batteries, a negative electrode compound for lithium ion secondary batteries, a negative electrode for lithium ion secondary batteries, and a lithium ion secondary battery.

Priority is claimed on Japanese Patent Applications No. 2011-166629 and No. 2011-167207, filed July 29, 2011, and Japanese Patent Application No. 2011-214531, filed September 29, 2011, the contents of which are incorporated herein by reference.

### Background Art

Along with the development of an increasing number of portable and cordless electronic devices, there is a strong demand for lithium ion secondary batteries having a decreased size, a decreased weight and an increased energy density. It is known that silicon, tin, germanium, magnesium, lead, and aluminum, which form an alloy with lithium, oxides or alloys thereof are employed as a negative electrode material to increase the density of lithium ion secondary batteries. However, the above-described negative electrode materials expand in volume during charging in which lithium ions are absorbed, and, conversely, contract in volume during discharging in which lithium ions are ejected. As a result, it is known that the volume of the negative electrode changes as the charge and discharge cycle repeats, and, consequently, there is a concern that the negative electrode material may turn into fine powder and drop from the electrode, whereby the negative electrode breaks.

In order to overcome the above-described problem, a variety of methods and means are being studied; however, currently, it is difficult to stabilize the charge and discharge characteristics in a case in which a metal or an oxide is used as the negative electrode material for lithium ion secondary batteries. Therefore, for example, PTL 1 proposes a composite that is made up of (A) silicon oxide represented by SiOx (0.5≤X<2) and (B) a conductive material which can adsorb and desorb lithium ions. PTL 1 describes that the composite is a preferable electrode material for electrical storage devices, and exhibits a high discharge capacity and favorable cycle characteristics, and therefore the composite is particularly preferably used as a negative electrode material for lithium ion secondary batteries. However, in the composite (precursor) in which silicon oxide and the conductive material are not phase-separated and are homogeneously maintained, it is difficult to suppress the expansion and contraction of the volume of a negative electrode active material occurring when lithium ions are absorbed and ejected during charging and discharging, and, consequently, there is a case in which the negative electrode material turns into fine powder, and drops from the electrode, whereby the negative electrode breaks. In addition, there is a case in which components, such as SiC, are generated, the reduction reaction of the silica particles does not sufficiently proceed, and a sufficient charge and discharge capacity density cannot be obtained.

In addition, for example, a negative electrode active material obtained by coating the surface of the particles of a metal that can form a lithium alloy with an organic substance is proposed as a negative electrode material for lithium ion secondary batteries having excellent charge and discharge characteristics as disclosed in PTL 2. According to the negative electrode material of PTL 2, it is described that a negative electrode active material containing metal particles with an average primary particle diameter in a range of 500 nm to 1 nm is used to suppress the expansion occurring when lithium ions are absorbed. However, depending on cases, a decrease in the primary particle diameters of the metal particles being used cannot suppress the expansion of the metal particles when lithium ions are absorbed during charging, and, consequently, there is a case in which the negative electrode material turns into fine powder, and drops from the electrode, whereby the negative electrode breaks.

### Citation List

### Patent Literature

[PTL 1] Japanese Unexamined Patent Application, First Publication No. 2007-220411
[PTL 2] Japanese Unexamined Patent Application, First Publication No. 2007-214137

### Summary of Invention

### Technical Problem

All the negative electrodes (materials) for lithium ion secondary batteries described in the above two patent literature suppress the expansion and contraction of the volume of the negative electrode active material caused by the charge and discharge cycle to a certain extent when the metal that forms an alloy with lithium is coated with carbon or treated. However, in the inventions described in the above two patent literature, it is not possible to sufficiently suppress the breakage of the negative electrode caused by the negative electrode material turning into fine powder due to the charge and discharge cycle, and it cannot be said that the negative electrodes for lithium ion secondary batteries have sufficient charge and discharge cycle characteristics. Therefore, an object of the invention is to provide a carbon material for lithium ion secondary batteries, a negative electrode active material for lithium ion secondary batteries, a composition, a carbon composite for negative electrode materials of lithium ion secondary batteries, a negative electrode compound for lithium ion secondary batteries, a negative electrode for lithium ion secondary batteries, and a lithium ion secondary battery which can provide lithium ion secondary batteries having a further improved charge and discharge capacity density and further improved charge and discharge cycle characteristics.

### Solution to Problem

The above-described object is achieved using the inventions of the following (1) to (42).
(1) A method for manufacturing a carbon material for lithium ion secondary batteries, including a mixing step of mixing a phenol resin and a resin composition containing silica particles so as to obtain a mixture; a spraying step of spraying the mixture obtained in the mixing step so as to form liquid droplets; a first thermal treatment step of carrying out a first thermal treatment on the liquid droplets obtained in the spraying step so as to generate a carbon precursor; and a second thermal treatment step of carrying out a second thermal treatment, which is carried out at a higher temperature than the first thermal treatment, on the carbon precursor obtained in the first thermal treatment step so as to generate a carbon material containing carbon and silicon oxide represented by SiOx (0<X<2).
(2) The method for manufacturing a carbon material for lithium ion secondary batteries according to the above (1), in which a method for spraying the mixture is a spraying method in which at least one of a ultrasonic atomization method and a two-fluid nozzle is used.
(3) The method for manufacturing a carbon material for lithium ion secondary batteries according to the above (1) or (2), in which a thermal treatment temperature of the first thermal treatment step is in a range of 150°C to 800°C.
(4) The method for manufacturing a carbon material for lithium ion secondary batteries according to any one of the above (1) to (3), in which a thermal treatment temperature of the second thermal treatment step is in a range of 900°C to 1200°C.
(5) The method for manufacturing a carbon material for lithium ion secondary batteries according to any one of the above (1) to (4), in which the first thermal treatment step of carrying out the first thermal treatment on the liquid droplets so as to generate the carbon precursor and the second thermal treatment step of carrying out the second thermal treatment on the carbon precursor so as to generate the carbon material containing carbon and SiOx (0<X<2) are continuously carried out in the same system.
(6) The method for manufacturing a carbon material for lithium ion secondary batteries according to any one of the above (1) to (5), in which the phenol resin is a water-soluble phenol resin.
(7) The method for manufacturing a carbon material for lithium ion secondary batteries according to any one of the above (1) to (6), in which the silica particles are in a range of 1 nm to 50 nm.
(8) The method for manufacturing a carbon material for lithium ion secondary batteries according to any one of the above (1) to (7), in which the silica particles are colloidal silica.
(9) The method for manufacturing a carbon material for lithium ion secondary batteries according to any one of the above (1) to (8), in which an average particle diameter of the carbon material containing carbon and silicon oxide represented by SiOx (0<X<2) is in a range of 1 µm to 50 µm.
(10) The method for manufacturing a carbon material for lithium ion secondary batteries according to any one of the above (1) to (9), in which the resin composition further contains a void-forming agent.
(11) The method for manufacturing a carbon material for lithium ion secondary batteries according to the above (10), in which the void-forming agent is a styrene butadiene rubber particle having an average particle diameter in a range of 1 nm to 500 nm.
(12) A carbon material for lithium ion secondary batteries manufactured using the method for manufacturing a carbon material for lithium ion secondary batteries according to any one of the above (1) to (11).
(13) A negative electrode compound for lithium ion secondary batteries containing the carbon material for lithium ion secondary batteries according to the above (12) and a binder.
(14) A negative electrode for lithium ion secondary batteries containing the negative electrode compound for lithium ion secondary batteries according to the above (13).
(15) A lithium ion secondary battery including the negative electrode for lithium ion secondary batteries according to the above (14).
(16) A negative electrode active material for lithium ion secondary batteries containing silicon oxide represented by SiOx (0<X<2) and a carbon material, in which the negative electrode active material for lithium ion secondary batteries has voids therein.
(17) The negative electrode active material for lithium ion secondary batteries according to the above (16), in which, when an area of the voids on a cross-section of the negative electrode active material for lithium ion secondary batteries is represented by S1, and an area of cross-sections of particles is represented by S2, a void area ratio S1/S2 is in a range of 0.03 to 0.50.
(18) The negative electrode active material for lithium ion secondary batteries according to the above (16) or (17), in which a fraction of the silicon oxide in the negative electrode active material for lithium ion secondary batteries is in a range of 10% by weight to 95% by weight.
(19) The negative electrode active material for lithium ion secondary batteries according to any one of the above (16) to (18), in which the negative electrode active material for lithium ion secondary batteries is spherical.
(20) The negative electrode active material for lithium ion secondary batteries according to any one of the above (16) to (19), in which an average particle diameter of the negative electrode active material for lithium ion secondary batteries is 20 µm or less.
(21) The negative electrode active material for lithium ion secondary batteries according to any one of the above (16) to (20), in which an average particle diameter of primary particles of the silicon oxide is in a range of 1 nm to 500 nm.
(22) The negative electrode active material for lithium ion secondary batteries according to any one of the above (16) to (21), in which an average diameter of the voids on the cross-section of the negative electrode active material for lithium ion secondary batteries is in a range of 20 nm to 500 nm.
(23) The negative electrode active material for lithium ion secondary batteries according to any one of the above (16) to (22), in which the composite particles are composite particles having an uneven structure on a surface, and a depth of the uneven structure is in a range of 20 nm to 500 nm.
(24) A negative electrode compound for lithium ion secondary batteries containing the negative electrode active material for lithium ion secondary batteries according to any one of the above (16) to (23) and a binder.
(25) A negative electrode for lithium ion secondary batteries containing the negative electrode compound for lithium ion secondary batteries according to the above (24).
(26) A lithium ion secondary battery including the negative electrode for lithium ion secondary batteries according to the above (25).
(27) A composition which has not yet been thermally treated and is used to form a carbon composite for negative electrode materials of lithium ion secondary batteries, containing silica particles and a phenol resin, in which, when an actual carbon ratio of the thermally-treated phenol resin is represented by A% by weight, a content of the silica particles with respect to a total weight of the silica particles and the phenol resin is in a range of 100A/(100+A)% by weight to 4900A/(100+49A)% by weight.
(28) The composition according to the above (27), in which the actual carbon ratio of the thermally-treated phenol resin is in a range of 10% by weight to 40% by weight.
(29) The composition according to the above (27) or (28), in which an average particle diameter of the silica particles is in a range of 1 nm to 50 nm.
(30) The composition according to any one of the above (27) to (29), in which the silica particles are colloidal silica.
(31) The composition according to any one of the above (27) to (30), in which a content ratio of sodium ions extracted from the silica particles using ion chromatography is in a range of 0.0001% by weight to 5% by weight of all the silica particles.
(32) The composition according to any one of the above (27) to (31), in which the phenol resin is a water-soluble phenol.
(33) The composition according to any one of the above (27) to (32), in which the composition contains a void-forming agent.
(34) The composition according to the above (33), in which the void-forming agent is a copolymer particle.
(35) The composition according to the above (34), in which the copolymer particles are styrene butadiene rubber copolymer particles.
(36) A carbon composite for negative electrode materials of lithium ion secondary batteries obtained by mixing and carrying out a thermal treatment on the composition according to any one of the above (27) to (35).
(37) The carbon composite for negative electrode materials of lithium ion secondary batteries according to the above (36), in which a mass ratio of SiOx (0<X<2) obtained by reducing the silica particles through the thermal treatment with respect to the carbon composite is in a range of 50% by weight to 98% by weight.
(38) The carbon composite for negative electrode materials of lithium ion secondary batteries according to the above (36) or (37), in which the carbon composite has voids.
(39) The composition according to any one of the above (37) and (38), in which the content ratio of the sodium ions extracted from the carbon composite using ion chromatography is in a range of 0.0001% by weight to 5% by weight of the entire carbon composite.
(40) A negative electrode compound for lithium ion secondary batteries, containing the carbon composite for negative electrode materials of lithium ion secondary batteries according to any one of the above (37) to (39) and a binder.
(41) A negative electrode for lithium ion secondary batteries containing the negative electrode compound for lithium ion secondary batteries according to the above (40).
(42) A lithium ion secondary battery including the negative electrode for lithium ion secondary batteries according to the above (41).

### Advantageous Effects of Invention

According to the invention, it becomes possible to provide a carbon material for lithium ion secondary batteries, a negative electrode compound for lithium ion secondary batteries, a negative electrode for lithium ion secondary batteries, and a lithium ion secondary battery which can provide lithium ion secondary batteries having a further improved charge and discharge capacity density and further improved charge and discharge cycle characteristics.

In addition, according to the invention, it becomes possible to provide a negative electrode active material for lithium ion secondary batteries, a negative electrode compound for lithium ion secondary batteries, a negative electrode for lithium ion secondary batteries, and a lithium ion secondary battery which further improve the charge and discharge cycle characteristics of a lithium ion secondary battery and, furthermore, increase the initial charge and discharge capacity (initial discharge capacity/initial charge capacity) as well.

Furthermore, according to the invention, it becomes possible to provide a composition, a carbon composite for negative electrode materials of lithium ion secondary batteries, a negative electrode compound for lithium ion secondary batteries, a negative electrode for lithium ion secondary batteries, and a lithium ion secondary battery which further improve the charge and discharge cycle characteristics of a lithium ion secondary battery and, furthermore, increase the charge and discharge capacity density as well.

### Brief Description of Drawings

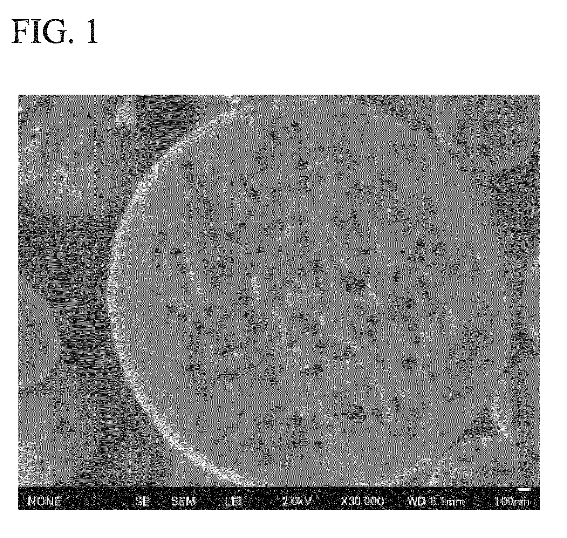

FIG. 1 is a typical example of a scanning electron microscopic (SEM) photograph of a negative electrode active material for lithium ion secondary batteries obtained in Example 5.

### Description of Embodiments

### (First embodiment)

Hereinafter, a method for manufacturing a carbon material for lithium ion secondary batteries, a carbon material for lithium ion secondary batteries of the invention, a negative electrode compound for lithium ion secondary batteries, a negative electrode for lithium ion secondary batteries, and a lithium ion secondary battery according to a first embodiment of the invention will be described in detail.

The method for manufacturing a carbon material for lithium ion secondary batteries according to the first embodiment of the invention is a method for manufacturing a carbon material for lithium ion secondary batteries including a mixing step of mixing a phenol resin and a resin composition containing silica particles so as to obtain a mixture, a spraying step of spraying the mixture obtained in the mixing step so as to form liquid droplets, a first thermal treatment step of carrying out a first thermal treatment on the liquid droplets obtained in the spraying step so as to generate a carbon precursor, and a second thermal treatment step of carrying out a second thermal treatment, which is carried out at a higher temperature than the first thermal treatment, on the carbon precursor obtained in the first thermal treatment step so as to generate fine composite particles containing carbon and silicon oxide represented by SiOx (0<X<2).

The carbon material for lithium ion secondary batteries according to the first embodiment of the invention is a carbon material for lithium ion secondary batteries manufactured using the above-described method for manufacturing a carbon material for lithium ion secondary batteries.

The negative electrode compound for lithium ion secondary batteries according to the first embodiment of the invention is a negative electrode compound for lithium ion secondary batteries containing the above-described carbon material for lithium ion secondary batteries and a binder.

The negative electrode for lithium ion secondary batteries according to the first embodiment of the invention is a negative electrode for lithium ion secondary batteries containing the above-described negative electrode compound for lithium ion secondary batteries.

The lithium ion secondary battery according to the first embodiment of the invention is a lithium ion secondary battery including the above-described negative electrode for lithium ion secondary batteries.

### [The method for manufacturing a carbon material for lithium ion secondary batteries]

First, the method for manufacturing a carbon material for lithium ion secondary batteries according to the first embodiment of the invention will be described.

The method for manufacturing a carbon material for lithium ion secondary batteries according to the first embodiment of the invention includes a mixing step of mixing a phenol resin and a resin composition containing silica particles so as to obtain a mixture; a spraying step of spraying the mixture obtained in the mixing step so as to form liquid droplets; a first thermal treatment step of carrying out a first thermal treatment on the liquid droplets obtained in the spraying step so as to generate a carbon precursor; and a second thermal treatment step of carrying out a second thermal treatment, which is carried out at a higher temperature than the first thermal treatment, on the carbon precursor obtained in the first thermal treatment step so as to generate a carbon material containing carbon and silicon oxide represented by SiOx (0<X<2).

### (Mixing step)

In the mixing step, a phenol resin and a resin composition containing silica particles are mixed so as to obtain a mixture. Then, it is possible to form liquid droplets in which the phenol resin and the silica particles are homogeneously dispersed in the spraying step.

A method for mixing the phenol resin and the silica particles is not particularly limited, and, for example, the mixture can be obtained by mixing and stirring the phenol resin, the silica particles and a dispersion solvent. In a case in which the respective components are mixed in a solid state, it is necessary to use a stirring apparatus having a strong stirring energy, such as a beads mill, to improve the dispersibility of the silica particles. More conveniently, in order to obtain a resin composition having a favorable dispersibility of the silica particles, it is preferable to separately produce or prepare a phenol resin solution in which a phenol resin is dispersed and a silica particle-dispersed solution in which silica particles are dispersed, mix and stir the solutions. Then, it is possible to conveniently carry out the mixing step without using a stirring apparatus having a strong stirring energy.

### (Spraying step)

In the spraying step, the mixture obtained in the mixing step is sprayed so as to form liquid droplets. Then, it is possible to form liquid droplets having particle diameters that are not significantly different.

In the spraying step, it is possible to use a method such as ultrasonic atomization, spraying in which a two-fluid nozzle is used, or electrostatic spraying. From the viewpoint of mass productivity, ultrasonic atomization or spraying in which a two-fluid nozzle is used is preferable, and spraying in which a two-fluid nozzle is used is more preferable. Then, it is possible to generate a large amount of liquid droplets having particle diameters that are relatively slightly different.

Ultrasonic atomization is initiated by, for example, connecting an ultrasonic atomizer unit (HM-2412 or HM-1630 manufactured by Honda Electronics Co., Ltd.) to the bottom of a plastic container, injecting a predetermined amount of the mixture obtained in the mixing step into the plastic container, and operating the unit. The spraying in which a two-fluid nozzle is used is carried out by, for example, performing spraying using a two-fluid nozzle that is used in a mini spray dryer (B-290) manufactured by Nihon Buchi K.K. and the like. The average particle diameter of liquid droplets sprayed using the above-described methods is preferably in a range of 0.1 µm to 50 µm, and more preferably in a range of 0.5 µm to 10 µm. When the average particle diameter is the above-described lower limit value or more, the variation in the component ratios in the liquid droplets is reduced, and, when the average particle diameter is the above-described upper limit value or less, the liquid droplets are sufficiently heated in a thermal treatment.

### (First thermal treatment step)

In the first thermal treatment step, a first thermal treatment is carried out on the liquid droplets obtained in the spraying step so as to form a carbon precursor. When the first thermal treatment step which is carried out at a temperature lower than that of the second thermal treatment step is carried out, it is possible to control the shape and dispersibility of a carbon material.

In the first thermal treatment step, a thermal treatment is carried out on the liquid droplets formed in the spraying step. At this time, the liquid droplets formed in the spraying step are preferably conveyed to the first thermal treatment step using an inert gas flow such as air or nitrogen. Then, it is possible to carry out the thermal treatment with no breakage of the liquid droplets and no connection of the liquid droplets. The first thermal treatment step is carried out by, for example, passing the liquid droplets through a ceramic tube heated at a temperature in a range of 150°C to 800°C. The temperature of the ceramic tube is preferably in a range of 150°C to 800°C, more preferably in a range of 300°C to 750°C, and still more preferably in a range of 400°C to 700°C. When the temperature is the above-described lower limit value or higher, the liquid droplets are sufficiently heated. Then, a sufficiently-dried carbon precursor can be obtained, and it becomes easy to transport the carbon precursor to the subsequent second thermal treatment step. In addition, when the temperature is the above-described upper limit value or lower, the phenol resin is decomposed at once so that gasified organic components are carbonized, and it is possible to prevent a state in which nano-order carbon particles, such as carbon black, and the silica particles are separated.

In a case in which a cheap and poorly heat-resistant metal tube or glass tube is used instead of the heat-resistant ceramic tube, there is a case in which the metal tube or glass tube cannot be sufficiently heated. In this case, it is preferable to adjust the temperature of the gas flow that transports the liquid droplets to the same temperature of the ceramic tube, that is, a temperature in a range of 150°C to 800°C, using a micro cable air heater or the like. In this case, the temperature of the gas is also, similar to what has been described above, preferably in a range of 150°C to 800°C, more preferably in a range of 300°C to 750°C, and still more preferably in a range of 400°C to 700°C. When the temperature is the above-described lower limit value or higher, the liquid droplets are sufficiently heated. Then, a sufficiently-dried carbon precursor can be obtained, and it becomes easy to transport the carbon precursor to the subsequent second thermal treatment step. In addition, when the temperature is the above-described upper limit value or lower, the phenol resin is decomposed at once so that gasified organic components are carbonized, and it is possible to prevent a state in which nano-order carbon particles, such as carbon black, and the silica particles are separated.

The heating time in a variety of tubes are determined depending on the retention time of the liquid droplets; however, since the liquid droplets have a small size, the heating time in the first thermal treatment is preferably in a range of 1 second to 10 seconds, and more preferably in a range of 2 seconds to 5 seconds while also depending on the heating temperature. When the heating time is the above-described lower limit value or more, the liquid droplets are sufficiently heated. Then, a sufficiently-dried carbon precursor can be obtained, and it becomes easy to transport the carbon precursor to the subsequent second thermal treatment step. In addition, when the heating time is the above-described upper limit value or less, the time of the thermal treatment becomes short, and the productivity becomes sufficient.

The shape of a variety of tubes may be a cylindrical shape having an inner diameter of several centimeters, a cylindrical shape or a conic shape which has a relatively large diameter and is used in ordinary spraying and drying apparatuses. In a case in which a tube having a large diameter is used, it is preferable to form a screw air flow so that the liquid droplets are transported along the tube, and to heat the gas flow in the above-described temperature range. Then, the liquid droplets are sufficiently heated.

### (Second thermal treatment step)

In the second thermal treatment step, a second thermal treatment is carried out on the carbon precursor obtained in the first thermal treatment step so as to generate a carbon material containing carbon and silicon oxide represented by SiOx (0<X<2). Then, phenol resin-derived components in the carbon precursor are sufficiently carbonized, some of SiO₂ in the silica particles is reduced, and it is possible to obtain a carbon material containing carbon and silicon oxide represented by SiOx (0<X<2).

The second thermal treatment step can be carried out using a variety of the same tubes as those in the first thermal treatment step. In addition, it is also possible to carry out the thermal treatment on the carbon precursor using a commercially available batch-type heating furnace or a continuous heating furnace. The heating temperature in the second thermal treatment is preferably in a range of 800°C to 1200°C, and more preferably in a range of 900°C to 1100°C.

When the heating temperature is the above-described lower limit value or higher, SiO₂ in the silica particles is sufficiently reduced so that the value of X in SiOx becomes small, and it is possible to obtain a lithium ion secondary battery exhibiting a high charge and discharge capacity density. In addition, when the heating temperature is the above-described upper limit value or lower, SiO₂ in the silica particles is sufficiently reduced before SiO₂ in the silica particles is crystallized, and it is possible to obtain a lithium ion secondary battery exhibiting a high charge and discharge capacity density.

The thermal treatment time of the second thermal treatment step is preferably in a range of 1 hour to 10 hours, and more preferably in a range of 2 hours to 8 hours. When the thermal treatment time is the above-described lower limit value or more, SiO₂ in the silica particles is sufficiently reduced so that the value of X in SiOx becomes small, and it is possible to obtain a lithium ion secondary battery exhibiting a high charge and discharge capacity density. In addition, when the thermal treatment temperature is the above-described upper limit value or lower, the time of the thermal treatment becomes short, and the productivity becomes sufficient. In addition, since the reduction reaction of the SiO₂ and a crystallization reaction of SiO₂ become competition reactions, in order to manufacture a carbon material that can product a lithium ion secondary battery having a high charge and discharge capacity density, it is necessary to appropriately adjust the reactions. For the adjustment of the reactions, it is necessary to highly precisely adjust the heating time and the heating temperature in the second thermal treatment. In addition to the adjustment of the heating time or the heating temperature, when impurities such as Na ions or Li ions are added to the carbon precursor to suppress the crystallization speed of the SiO₂, the crystallization of the SiO₂ is suppressed, the reduction reaction of the SiO₂ dominantly proceeds, and the capacity can be smoothly increased. In addition, it is also possible to add and mix a reducing agent to the silica particle-dispersed fluid or the resin mixture. Hydrazine monohydrate, sodium borohydride or the like is preferably used as the reducing agent.

The first thermal treatment step and the second thermal treatment step may be carried out in separate systems, and can be continuously carried out in the same system. For example, it is possible to adjust the temperature of the upper part of the tube such as a ceramic tube in a range of 800°C to 1200°C and the temperature of the lower part in a range of 150°C to 800°C. In addition, it is also possible to carry out the first thermal treatment step and the second thermal treatment step by coupling a spraying and drying apparatus in which gas is heated at a high temperature and a spraying and thermal decomposition apparatus.

Any compound having one or more phenolic hydroxyl groups in the molecule can be used as the phenol resin. Examples of the phenol resin include novolac resins such as novolac-type phenol, novolac-type cresol and novolac-type naphthol; bisphenol resins such as bisphenol F and bisphenol A; phenol aralkyl resins such as paraxylene-denatured phenol resin; resole-type phenol resins such as dimethylene ether-type resole and methylol-type phenol; compounds obtained by further methylolating the above-described resin; lignin, lignin derivatives and decomposed lignin having one or more phenolic hydroxyl groups; substances obtained by denaturing lignin, a lignin derivative or a decomposed lignin; and substances containing a mixture of the above-described substance and a phenol resin manufactured from a petroleum resource. Among the above-described substances, a water-soluble phenol resin is preferably used from the viewpoint of environment responsiveness, costs and ease of spraying.

The silica particles are not particularly limited, but colloidal silica which is a dispersion obtained by dispersing silica particles in a dispersion medium such as water is preferably used from the viewpoint of environment responsiveness, costs and ease of spraying.

The particle diameter of the silica particles is preferably in a range of 1 nm to 50 nm, and more preferably in a range of 5 nm to 10 nm. When the particle diameter is the above-described lower limit value or more, the generation of components such as SiC is suppressed in the second thermal treatment, the reduction reaction of the SiO₂ sufficiently proceeds, and it is possible to obtain a lithium ion secondary battery exhibiting a high charge and discharge capacity density. In addition, when the particle diameter exceeds the upper limit value, the reduction reaction of the SiO₂ does not proceed even in the carbon material such that there is a problem in that, when a lithium ion secondary battery is produced, a sufficiently high charge and discharge capacity density is not developed or the changed SiOx is returned to SiO₂ due to the influence of the remaining SiO₂ component so as to decrease the charge and discharge capacity density.

Here, in the invention, the average particle diameter can be measured using a dynamic light scattering apparatus (for example, ZETASIZER NANO ZS manufactured by Malvern Instruments Ltd.) in a case in which the average particle diameter is less than 100 nm. In addition, the average particle diameter can be measured using a laser diffraction-type particle size distribution measurement apparatus (for example, LA-920 manufactured by Horiba Ltd.) in a case in which the average particle diameter is 100 nm or more. A particle diameter at which the frequency becomes 50% in terms of volume was specified as the average particle diameter D50%.

The carbon material according to the invention is made up of particles containing silicon oxide represented by SiOx (0<X<2) and composite particles containing carbon material particles. The particles containing silicon oxide represented by SiOx (0<X<2) may be fully surrounded by the above-described carbon material particles, and may not be fully surrounded with some of the particles containing silicon oxide represented by SiOx (0<X<2) projecting from the surface of the carbon material.

The shape of the carbon material is not particularly limited, and can be an arbitrary particle shape such as a lump shape, a scale shape, a spherical shape or a fibrous shape. In addition, regarding the size of the carbon material, the average particle diameter is preferably in a range of 1 µm to 50 µm, and more preferably in a range of 5 µm to 10 µm in terms of the charge and discharge characteristics. When the average particle diameter is larger than the above-described upper limit value, intervals between the carbon material particles become large, and, in a case in which the carbon material is used to manufacture a negative electrode of a lithium ion secondary battery, there is a concern that it may be impossible to improve the density of the negative electrode. In addition, when the average particle diameter is smaller than the above-described lower limit value, the number of the carbon material particles per unit mass increases such that the entire volume becomes large, and there is a concern that a problem of difficulty in handling the carbon material may occur.

Here, the average particle diameter of the carbon material was obtained by spreading 0.5 g of the carbon material onto a plate to which a double-stick tape had been attached, carrying out SEM observation, randomly observing 30 particles shown in a SEM image, obtaining particle diameters, and computing the average value of the particle diameters.

The silicon oxide in the particles containing silicon oxide represented by SiOx (0<X≤2) contained in the carbon material is silicon oxide represented by a chemical formula: SiOx, and X can be arbitrarily selected in a range of 0<X≤2. That is, the particles containing the silicon oxide may be made up of at least two kinds of silicon oxide having at least two X values. In a case in which the particles containing the silicon oxide are made up of at least two kinds of silicon oxide, the carbon material preferably has an inclined structure in which X increases toward the center from the surface of the carbon material. When the carbon material has the inclined structure, lithium ions become easily absorbed on the surface of the carbon material, and the charge and discharge characteristics improve.

The resin composition containing the phenol resin and the silica particles can further contain a void-forming agent. When the resin composition contains a void-forming agent, the void-forming agent volatilizes in the first thermal treatment step or the second thermal treatment step, whereby voids are formed in the carbon material. Then, it is possible to improve the cycle characteristics in lithium ion secondary batteries.

The void-forming agent is not particularly limited as long as the void-forming agent can volatilize and form voids, and a thermoplastic resin or an elastomer is used. Specific examples of the thermoplastic resin include polycarbosilane, polyvinyl alcohol, polyethylene glycol, polyacrylic acid, methyl cellulose, carboxy methyl cellulose, and the like, and specific examples of the elastomer include styrene butadiene rubber, nitrile butadiene rubber, acrylic acid ester, vinyl acetate, methyl methacrylate butadiene rubber, chloroprene rubber, carboxy-denatured styrene butadiene rubber, latexes obtained by dispersing the above-described elastomer in water or the like.

Among the above-described elastomers, latexes in which styrene butadiene rubber particles are dispersed, such as styrene butadiene rubber latex, are preferably used since it is easy to control the size and shape of the voids.

The particle diameter of the void-forming agent is not particularly limited as long as the particle diameter is smaller than that of the carbon material, but is preferably in a range of 1 nm to 500 nm, and more preferably in a range of 5 nm to 200 nm. When the average particle diameter is the above-described lower limit value or more, it is possible to sufficiently absorb expansion and contraction occurring during the charge and discharge of SiOx, and it is possible to sufficiently prevent the breakage of the carbon material. In addition, when the average particle diameter exceeds the above-described upper limit value, the inside voids are too large such that, when an electrode is produced, there is a problem in that the electrode density does not increase and the charge and discharge capacity density per volume decreases.

### [Carbon material for lithium ion secondary batteries]

Next, the carbon material for lithium ion secondary batteries of the invention will be described.

The carbon material for lithium ion secondary batteries of the invention is a carbon material for lithium ion secondary batteries manufactured using the above-described method for manufacturing a carbon material for lithium ion secondary batteries.

### [Negative electrode compound for lithium ion secondary batteries]

Next, the negative electrode compound for lithium ion secondary batteries of the invention will be described.

The negative electrode compound for lithium ion secondary batteries of the invention is a negative electrode compound for lithium ion secondary batteries containing the carbon material for lithium ion secondary batteries and a binder.

The negative electrode compound for lithium ion secondary batteries according to the invention contains the above-described carbon material for lithium ion secondary batteries, and therefore it is possible to produce the negative electrode compound for lithium ion secondary batteries according to the invention using the negative electrode active material for lithium ion secondary batteries according to the invention which is obtained as described above. The negative electrode compound for lithium ion secondary batteries according to the invention may be prepared using a well-known method of the related art, or can be prepared as a slurry having a predetermined viscosity obtained by adding a binder to the above-described carbon material for lithium ion secondary batteries as the negative electrode active material and using an appropriate solvent or dispersion medium. At this time, a conducting agent and the like may be added to the slurry as necessary.

The binder used to produce the above-described negative electrode compound for lithium ion secondary batteries may be a well-known material of the related art, and, for example, a polyvinylidene fluoride resin, polytetrafluoroethylene, a styrene butadiene copolymer, a polyimide resin, a polyamide resin, polyvinyl alcohol, polyvinyl butyral or the like can be used. In addition, any material ordinarily used as a conducting aid can be used as the conducting agent, and examples thereof include graphite, acetylene black, ketjen black, and the like. Furthermore, any material that can homogeneously mix the negative electrode active material, the binder, the conducting agent and the like can be used as the solvent or dispersion medium used to produce the negative electrode according to the invention, and examples thereof include water, N-methyl-2-pyrrolidone, methanol, acetonitrile, and the like.

### [Negative electrode for lithium ion secondary batteries]

Next, the negative electrode for lithium ion secondary batteries of the invention will be described.

The negative electrode for lithium ion secondary batteries of the invention is a negative electrode for lithium ion secondary batteries containing the above-described negative electrode compound for lithium ion secondary batteries of the invention.

The negative electrode for lithium ion secondary batteries is not particularly limited, but is preferably a negative electrode having a structure in which a negative electrode active material is stacked on a collector made of a metallic foil such as aluminum or copper. The negative electrode for lithium ion secondary batteries of the invention contains the above-described negative electrode compound for lithium ion secondary batteries, and the negative electrode for lithium ion secondary batteries can be produced using the above-described negative electrode compound for lithium ion secondary batteries obtained as descried above. Specifically, the negative electrode for lithium ion secondary batteries can be produced by applying the negative electrode compound for lithium ion secondary batteries on a collector such as a metallic foil, forming a coated layer having a thickness in a range of several µm to several hundreds of µm, and carrying out a thermal treatment on the coated layer at a temperature in a range of 50°C to 200°C so as to eliminate the solvent or the dispersion medium.

### [Lithium ion secondary battery]

Next, the lithium ion secondary battery of the invention will be described.

The lithium ion secondary battery of the invention is a lithium ion secondary battery including the above-described negative electrode for lithium ion secondary batteries.

The lithium ion secondary battery can be produced using the above-described negative electrode for lithium ion secondary batteries. The lithium ion secondary battery can be produced using a well-known method of the related art, and, generally, the lithium ion secondary battery includes the above-described negative electrode for lithium ion secondary batteries, a positive electrode and an electrolyte, and further includes a separator to prevent short-circuiting between the negative electrode and the positive electrode. In a case in which the electrolyte is a solid electrolyte that is obtained by complexing a polymer and concurrently has a separator function, an independent separator is not required.

The positive electrode used to produce the lithium ion secondary battery can be produced using a well-known method of the related art. For example, a slurry having a predetermined viscosity obtained by adding a binder, a conducting agent and the like to a positive electrode active material and using an appropriate solvent or dispersion medium is prepared, the slurry is applied to a collector such as a metallic foil, a coated layer having a thickness in a range of several µm to several hundreds of µm is formed, and the coated layer is thermally treated at a temperature in a range of 50°C to 200°C so as to eliminate the solvent or the dispersion medium. The positive electrode active material may be a well-known material of the related art, and examples thereof that can be used include cobalt complex oxides such as LiCoO₂, manganese complex oxides such as LiMn₂O₄, nickel complex oxides such as LiNiO₂, mixtures of the above-described complex oxides, complex oxides obtained by substituting some of nickel in LiNiO₂ by cobalt or manganese, iron complex oxides such as LiFeVO₄ and LiFePO₄, and the like.

A well-known electrolytic solution, an ambient temperature molten salt (ion liquid), an organic or inorganic solid electrolyte, or the like can be used as the electrolyte. Examples of the well-known electrolytic solution include cyclic carbonate esters such as ethylene carbonate and propylene carbonate; chain carbonate esters such as ethyl methyl carbonate and diethyl carbonate; and the like. In addition, examples of the ambient temperature molten salt (ion liquid) include imidazolium-based salts, pyrrolidinium-based salts, pyridinium-based salts, ammonium-based salts, phosphonium-based salts, sulfonium-based salts, and the like. Examples of the solid electrolyte include organic polymer gels represented by straight-chain polymers such as polyether-based polymers, polyester-based polymers, polyimine-based polymers, polyvinyl acetal-based polymers, polyacrylonitrile-based polymers, polyalkene fluoride-based polymers, polyvinyl chloride-based polymers, poly(vinyl chloride-vinylidene fluoride)-based polymers, poly(styrene-acrylonitrile)-based polymers, and nitrile rubber; inorganic ceramics such as zirconia; inorganic electrolytes such as silver iodize, silver iodize sulfur compounds, and silver iodide rubidium compounds; and the like. In addition, an electrolyte obtained by dissolving a lithium salt in the above-described electrolyte can be used as the electrolyte for secondary batteries. In addition, it is also possible to add a flame-resistant electrolyte dissolving agent to supply flame resistance to the electrolyte. In addition, it is also possible to add a plasticizer to decrease the viscosity of the electrolyte.

Examples of the lithium salt dissolved in the electrolyte include LiPF₆, LiClO₄, LiCF₃SO₃, LiBF₄, LiAsF₆, LiN(CF₃SO₂)₂, LiN(C₂F₅SO₂)₂, LiC(CF₃SO₂)₃, and the like. The lithium salt may be used solely or in combination of two or more lithium salts. The content of the lithium salt is generally in a range of 0.1% by mass to 89.9% by mass, and preferably in a range of 1.0% by mass to 79.0% by mass with respect to the total electrolyte. Components of the electrolyte other than the lithium salt can be added under a condition that the content of the lithium salt is in the above-described range.

The polymer used in the electrolyte is not particularly limited as long as the polymer is electrochemically stable and has high ion conductivity, and, for example, an acrylate-based polymer, polyvinyl fluoride, or the like can be used. In addition, polymers synthesized from a substance containing a salt monomer made up of an onium cation having a polymerizable functional group and an organic anion having a polymerizable functional group is more preferable particularly because the polymers have high ion conductivity and can contribute to additional improvement of the charge and discharge characteristics. The content of the polymer in the electrolyte is preferably in a range of 0.1% by mass to 50% by mass, and more preferably in a range of 1% by mass to 40% by mass.

The flame-resistant electrolyte dissolving agent is not particularly limited as long as the flame-resistant electrolyte dissolving agent is a compound that exhibits a self-extinguishing property and can dissolve an electrolytic salt in a state in which the electrolytic salt coexists, and, for example, phosphate ester, a halogen compound, phosphazene or the like can be used.

Examples of the plasticizer include cyclic carbonates such as ethylene carbonate and propylene carbonate; chain carbonates such as ethyl methyl carbonate and diethyl carbonate; and the like. The plasticizer may be used solely or in combination of two or more plasticizers.

In a case in which a separator is used in the lithium ion secondary battery according to the invention, it is possible to prevent short-circuiting between the positive electrode and the negative electrode, and a well-known material of the related art which is electrochemically stable may be used as the separator. Examples of the separator include polyethylene separators, polypropylene separators, cellulose separators, non-woven fabrics, inorganic separators, glass filters, and the like. In a case in which the electrolyte contains a polymer, there is a case in which the electrolyte has a separator function, and, in this case, an independent separator is not required.

A well-known method can be applied as the method for manufacturing a lithium ion secondary battery of the invention. For example, first, the positive electrode and the negative electrode, both of which are obtained above, are cut into a predetermined shape and a predetermined size, and then the positive electrode and the negative electrode are attached to each other through the separator to prevent the direct contact of both electrodes, thereby producing a single layer cell. Next, the electrolyte is injected between the electrodes in the single-layer cell using a method such as clysis. The above-obtained cell is inserted into an exterior body made of a laminate film having a three-layer structure of, for example, a polyester film, an aluminum film, and a denatured polyolefin film, and sealed, thereby obtaining a secondary battery. The obtained secondary battery may be used in a form of a single cell or a module to which a plurality of cells are connected depending on usage.

### [Examples]

Hereinafter, examples for more specifically describing the first embodiment of the invention will be provided. Meanwhile, the invention is not limited to the following examples within the scope of the purpose and purport of the invention.

### (Example 1)

### 1) Mixing step

A water-soluble phenol resin (manufactured by Sumitomo Bakelite Co., Ltd., PR55743, 50 wt% aqueous solution, 12 g) as the phenol resin, colloidal silica (manufactured by Nissan Chemical Industries, Ltd., SNOTEX OS, average particle diameter in a range of 8 nm to 11 nm, 20 wt% aqueous solution, 30 g) as the silica particles, styrene butadiene rubber latex (manufactured by JSR Corporation, TRD 2001, average particle diameter of 150 nm, 48 wt% aqueous solution, 1 g) as the void-forming agent, and ion exchange water (541 g) were mixed and stirred in a flask, thereby obtaining a mixture.

### 2) Spraying step

The mixture was sprayed using an ultrasonic atomizer apparatus (ultrasonic atomizer unit: produced by the inventors using HM-2412 manufactured by Honda Electronics Co., Ltd.), thereby generating liquid droplets.

### 3) First thermal treatment step

The liquid droplets were transported to a furnace at 300°C in a nitrogen flow, thereby carrying out a first thermal treatment step for 3 seconds. Then, the liquid droplets were dried, cured, and thermally decomposed, and a carbon precursor was trapped using an electrostatic trapping machine (high-pressure power supply: produced using HARb-15NS manufactured by Matsusada Precision Inc.) that had been adjusted to 150°C and -10 kV.

### 4) Second thermal treatment step

The trapped carbon precursor was put into a ceramic tube, and thermally treated in a furnace at 1000°C for 6 hours in a nitrogen flow, thereby obtaining a carbon material containing carbon and silicon oxide represented by SiOx (0<X<2). As a result of observing the obtained carbon material using a scanning electron microscope (SEM) (manufactured by JEOL Ltd., JSM-7401 F), it was confirmed that the carbon material had a substantially spherical shape and an average particle diameter of approximately 1 µm. Meanwhile, the average particle diameter was measured in the following manner. The produced mother body of carbon powder was mixed well, then, approximately 0.3 g of the carbon powder was sampled at each of 5 randomly-selected places, the sample carbon powder was mixed again, 0.5 g of the sample was spread onto a plate to which a double-stick tape had been attached, SEM observation was carried out, 30 randomly-selected particles shown in a SEM image were observed, the particle diameters were obtained, and the average value of the particle diameters was used as the average particle diameter. In addition, as a result of raising the temperature from room temperature to 800°C at a temperature-rise rate of 10°C/minute using a simultaneous thermo gravimetry and differential thermal analyzer (TG/DTA) (manufactured by Seiko Instruments Inc., TG/DTA 6200), and computing the weight ratio of carbon to silicon oxide represented by SiOx (0<X<1) from the weight decrease, the ratio of carbon to silicon oxide was 17:83.

### 5) Production of the electrode compound for lithium ion secondary batteries

The above-described carbon material, carboxy methyl cellulose (CMC) (manufactured by Daicel FineChem Ltd., CMC Daicel 2200) which is a commercially available binder, and acetylene black (DENKA BLACK manufactured by Denki Kagaku Kogyo Kabushiki Kaisha) as the conducting assistant were mixed in a mass ratio of 100:7:4, condensed as necessary, and the viscosity was adjusted, thereby obtaining an electrode compound for lithium ion secondary batteries. Specifically, first, CMC was dissolved in a predetermined amount of water, thereby preparing a 2% by mass aqueous solution. Next, a predetermined amount of the carbon material and the conducting assistant were added to the CMC aqueous solution so as to make the above-described mass ratio, stirred and mixed using a planetary centrifugal mixer. During the stirring and mixing, a small amount of water was added to the planetary centrifugal mixer so that the final viscosity became 5000 mPa·sec.

### 6) Production of the electrode (negative electrode) for lithium ion secondary batteries

The above-described electrode compound for lithium ion secondary batteries was applied to a 20 µm-thick copper foil, and then dried at 110° for 1 hour in a vacuum. After the vacuum drying, the electrode compound was pressurized through roll pressing, and punched at a diameter of φ13 mm, thereby obtaining an electrode for lithium ion secondary batteries.

### 7) Production of the lithium ion secondary battery

The above-produced electrode (negative electrode) for lithium ion secondary batteries, a separator (polypropylene porous film: diameter φ of 16 and a thickness of 25 µm), and lithium metal (diameter φ of 12 and a thickness of 1 mm) as a working electrode were sequentially disposed at a predetermined location in a 2032-type coin cell manufactured by Hohsen Corp.. Furthermore, a solution obtained by dissolving lithium perchlorate at a concentration of 1 [mol/liter] was injected into a liquid mixture of ethylene carbonate and diethylene carbonate (having a volume ratio of 1:1) as the electrolytic solution, thereby producing a lithium ion secondary battery.

### (Example 2)

A carbon material was obtained in the same manner as in Example 1 except for the fact that the thermal treatment temperature was set to 800°C in the first thermal treatment step, and a lithium ion secondary battery was produced.

### (Example 3)

A carbon material was obtained in the same manner as in Example 1 except for the fact that the thermal treatment temperature was set to 1200°C in the second thermal treatment step, and a lithium ion secondary battery was produced.

### (Example 4)

A carbon material was obtained in the same manner as in Example 1 except for the facts that the thermal treatment temperature was set to 700°C in the first thermal treatment step, and the thermal treatment temperature was set to 1200°C in the second thermal treatment step, and a lithium ion secondary battery was produced.

### (Comparative Example 1)

A carbon material was obtained in the same manner as in Example 1 except for the facts that the first thermal treatment step was not carried out, and the thermal treatment temperature was set to 1200°C in the second thermal treatment step, and a lithium ion secondary battery was produced.

### (Comparative Example 2)

Carbon particles were obtained in the same manner as in Example 1 except for the fact that the silica particles were not contained in the mixing step, and a lithium ion secondary battery was produced.

For the secondary batteries of Examples 1 to 4 and Comparative Examples 1 and 2 which were obtained as described above, the discharge characteristics and the cycle characteristics were evaluated using the evaluation methods described below.

### (Evaluation of the initial charge and discharge characteristics)

The charge and discharge characteristics were evaluated by carrying out constant current charging at a current density set to 25 mA/g during charging, carrying out constant voltage discharging at 2.5 V from when the potential reached 2.5 V, and using the amount of electricity discharged until the current density reached 1.25 mA/g as the discharge capacity. Meanwhile, the discharge characteristics were evaluated using a charge and discharge characteristic evaluator (manufactured by Hokuto Denko Corp.: HJR-1010mSM8).

### (Evaluation of the charge and discharge cycle characteristics)

A discharge capacity measured after repeating the evaluation conditions for the initial charge and discharge characteristics 50 times was used as the discharge capacity at the 50^{th} cycle. In addition, the charge and discharge cycle characteristics (capacity maintenance rate after 50 cycles) were defined using the following formula.

Cycle property (%, capacity maintenance rate after 50 cycles)=discharge capacity at 50^{th} cycle (mAh/g)/initial discharge capacity (mAh/g)×100

### (Evaluation criteria of the initial charge and discharge characteristics)

A: The discharge capacity is 600 mAh/g or more.
B: The discharge capacity is in a range of 400 mAh/g to less than 600 mAh/g.
C: The discharge capacity is in a range of 200 mAh/g to less than 400 mAh/g.
D: The discharge capacity is in a range of 0 mAh/g to less than 200 mAh/g.

### (Evaluation criteria of the charge and discharge cycle property)

A: The capacity maintenance rate after 50 cycles is 95% or more.
B: The capacity maintenance rate after 50 cycles is 90% to less than 95%.
C: The capacity maintenance rate after 50 cycles is 80% to less than 90%.
D: The capacity maintenance rate after 50 cycles is less than 80%.

The evaluation results of the respective examples and the respective comparative examples are described in Table 1.

**[Table 1]**

| | Thermal treatment temperature of the first thermal treatment (°C) | Thermal treatment temperature of the second thermal treatment (°C) | Discharge characteristics | Charge and discharge cycle characteristics |
|---|---|---|---|---|
| Example 1 | 300 | 1000 | A | A |
| Example 2 | 800 | 1000 | B | A |
| Example 3 | 300 | 1200 | B | A |
| Example 4 | 700 | 1200 | B | A |
| Comparative Example 1 | - | 1200 | D | D |
| Comparative Example 2 | 700 | 1200 | C | C |

As is evident from Table 1, Examples 1 to 4 exhibited high charge and discharge characteristics and high charge and discharge cycle characteristics, but Comparative Examples 1 and 2 resulted in insufficient charge and discharge characteristics and insufficient charge and discharge cycle characteristics compared with Examples 1 to 4.

From what has been described above, it was confirmed that the invention provides a carbon material for lithium ion secondary batteries, a negative electrode compound for lithium ion secondary batteries, a negative electrode for lithium ion secondary batteries, and a lithium ion secondary battery which can provide lithium ion secondary batteries having a further improved charge and discharge capacity density and further improved charge and discharge cycle characteristics.

### (Second embodiment)

Hereinafter, a negative electrode active material for lithium ion secondary batteries, a negative electrode compound for lithium ion secondary batteries, a negative electrode for lithium ion secondary batteries, and a lithium ion secondary battery according to a second embodiment of the invention will be described in detail.

The negative electrode active material for lithium ion secondary batteries according to the second embodiment of the invention is a negative electrode active material for lithium ion secondary batteries containing silicon oxide represented by SiOx (0<X<2) and a carbon material, in which the negative electrode active material for lithium ion secondary batteries has voids therein.

The negative electrode compound for lithium ion secondary batteries according to the second embodiment of the invention is a negative electrode compound for lithium ion secondary batteries containing the above-described negative electrode active material for lithium ion secondary batteries and a binder.

The negative electrode for lithium ion secondary batteries according to the second embodiment of the invention is a negative electrode for lithium ion secondary batteries containing the above-described negative electrode compound for lithium ion secondary batteries.

The lithium ion secondary battery according to the second embodiment of the invention is a lithium ion secondary battery including the above-described negative electrode for lithium ion secondary batteries.

### [Negative electrode active material for lithium ion secondary batteries]

First, the negative electrode active material for lithium ion secondary batteries according to the second embodiment of the invention will be described.

The negative electrode active material for lithium ion secondary batteries according to the second embodiment of the invention is a negative electrode active material for lithium ion secondary batteries containing silicon oxide represented by SiOx (0<X<2) and a carbon material, in which the negative electrode active material for lithium ion secondary batteries has voids therein.

The negative electrode active material for lithium ion secondary batteries (hereinafter, referred to as negative electrode active material) improves the conductivity due to the silicon oxide represented by SiOx (0<X<2) and the carbon material so as to realize an increase in the capacity of lithium ion secondary batteries, and, furthermore, has voids so as to absorb the expansion of the volume of SiOx (0<X<2), thereby preventing the breakage of electrodes while maintaining the high conductivity and the increase in the capacity of lithium ion secondary batteries, and realizing an excellent effect that improves the cycle characteristics.

The silicon oxide represented by SiOx (0<X<2) which configures the negative electrode active material is silicon oxide represented by a chemical formula: SiOx, and X can be arbitrarily selected in a range of 0<X≤2. That is, the silicon oxide may be made up of at least two kinds of silicon oxides having at least two X values. In a case in which the particles containing the silicon oxide are made up of at least two kinds of silicon oxides, the negative electrode active material preferably has an inclined structure in which X in the silicon oxide increases toward the center from the surface of the negative electrode active material. When the negative electrode active material has the inclined structure, lithium ions become easily absorbed on the surface of the negative electrode active material, and the charge and discharge characteristics improve.

The carbon material is a compound obtained by carrying out a carbonization treatment on a carbon precursor described below, and examples of the carbon precursor include easily graphitized materials or barely graphitized materials selected from a group consisting of petroleum pitch, coal pitch, phenol resins, furan resins, epoxy resins and polyacrylonitrile.

The negative electrode active material has voids in the negative electrode active material. The voids absorb the expansion of the volume of SiOx (0<X<2), thereby preventing the breakage of negative electrodes, and exhibiting an excellent effect that improves the cycle characteristics.

When the void area ratio is represented by S1/S2 in which the area of the voids on a cross-section of the negative electrode active material is represented by S1 and the area of the cross-sections of the particles is represented by S2, the void area ratio is not particularly limited, but is preferably in a range of 0.03 to 0.50, and more preferably in a range of 0.04 to 0.40. When the void area ratio is in the above-described range, the expansion and contraction of the particles containing SiOx (0<X<2) caused by charge and discharge is suppressed, and the cycle characteristics improve.

The void area ratio can be obtained by measuring the area of the voids with respect to the cross-sections (the cut area of the negative electrode active material computed with an assumption that there is no void) when the negative electrode active material forms an arbitrary cross-section using an FIB method or an Ar ion milling method.

For example, the void area ratio can be obtained by binarizing an SEM image of a cross-section of the particles formed using the FIB method, and obtaining the area of the voids.

In addition, the average diameter of the voids on the cross-section of the negative electrode active material is not particularly limited, but is preferably in a range of 20 nm to 500 nm, and more preferably in a range of 50 nm to 350 nm. When the average diameter of the voids is within the above-described preferable range, it is possible to effectively absorb the expansion and contraction of the negative electrode active material containing SiOx (0<X<2) caused by charge and discharge, and to suppress a decrease in the mechanical strength of the negative electrode active material due to the presence of the voids, and an excellent effect that improves the cycle characteristics is exhibited.

The average diameter of the voids on the cross-section of the negative electrode active material was obtained by observing 30 random voids shown in an SEM image of a cross-section of the negative electrode active material formed using the FIB method or the Ar ion milling method, measuring the diameters (long diameters) of the respective voids, and computing the average value of the diameters.

In order to form the above-described voids, for example, in a step of manufacturing the negative electrode active material described below, a void-forming agent is added to a mixture of the carbon precursor and a SiOx precursor, and the void-forming agent is volatilzed in a carburation treatment described below, thereby forming voids, or the carbonization treatment is carried out in a state in which air bubbles are included in the mixture.

The negative electrode active material preferably has an uneven structure on the surface. When the negative electrode active material has an uneven structure, it becomes easy to maintain a conductive network even when the volume changes due to the absorption and emission of lithium ions, and the cycle characteristics improve.

The depth of the uneven structure is not particularly limited, but is preferably in a range of 20 nm to 500 nm, and more preferably in a range of 50 nm to 300 nm. When the depth of the uneven structure is in the above-described preferable range, it is possible to suppress an increase in the specific surface area due to the uneven structure, and it is possible to suppress a decrease in the charge and discharge efficiency.

The negative electrode active material preferably contains the silicon oxide represented by SiOx (0<X<2) at a mass ratio in a range of 5% by weight to 95% by weight with respect to the negative electrode active material. The mass ratio is more preferably in a range of 50% by weight to 93% by weight, and most preferably in a range of 70% by weight to 90% by weight. When the content of the silicon oxide represented by SiOx (0<X<2) is less than 5% by weight, there is a case in which only a small amount of lithium ions are absorbed, and a high charge and discharge capacity cannot be obtained. On the other hand, when the content is more than 95% by weight, the effect of the carbon material that supplies conductivity becomes weak such that there is a concern that the charge and discharge cycle characteristics may degrade. Here, the content of the silicon oxide represented by SiOx (0<X<2) can be measured using the determination of ash according to JIS K 2272:1998.

The negative electrode active material can have an arbitrary particle shape such as a lump shape, a scale shape, a spherical shape or a fibrous shape; however, among the above-described shapes, a spherical shape is preferable. When the particle shape of the negative electrode active material is a spherical shape, it is possible to suppress an increase in the specific surface area and to obtain a high charge and discharge efficiency.

The average particle diameter of the negative electrode active material is preferably 20 µm or less, more preferably 15 µm or less, and still more preferably 12 µm or less. When the average particle diameter of the negative electrode active material is more than the upper limit value, while there is no practical obstacle, the intervals between the negative electrode active material particles increase, and, in a case in which the negative electrode active material is used for negative electrodes in lithium ion secondary batteries, there is a concern that it may become impossible to improve the density of the negative electrodes.

The particle diameter of the negative electrode active material refers to a value obtained by computing a measured amount into a particle diameter using the particle shape and the Mie theory, and is called an effective diameter. Regarding the average particle diameter of the negative electrode active material in the invention, water was used as a dispersion medium, a commercially available surfactant was used as a dispersant, the negative electrode active material was dispersed in water using an ultrasonic treatment, and a particle diameter at which the frequency became 50% in terms of volume measured using a laser diffraction-type particle size distribution measurement method was specified as the average particle diameter D50%.

In the second embodiment of the invention, the average particle diameter of primary particles of the silicon oxide represented by SiOx (0<X<2) is preferably in a range of 1 nm to 500 nm, and more preferably in a range of 5 nm to 200 nm. When the average particle diameter is in the above-described range, the breakage of the negative electrode caused by the expansion and contraction of the particles containing the silicon oxide represented by SiOx (0<X<2) due to charge and discharge is suppressed, and the cycle characteristics of lithium ion secondary batteries further improve.

When the average particle diameter of the primary particles of the silicon oxide represented by SiOx (0<X<2) is smaller than the above-described lower limit value, the specific surface area of the silicon oxide represented by SiOx (0<X<2) becomes large, and there is a concern that the charge and discharge efficiency may decrease. On the other hand, when the average particle diameter of the primary particles of the silicon oxide represented by SiOx (0<X<2) is larger than the above-described upper limit value, the amount of lithium ions absorbed by the primary particles of the silicon oxide represented by SiOx (0<X<2) increases such that there is a concern that the negative electrode may break.

The average particle diameter of the primary particles of the silicon oxide represented by SiOx (0<X<2) was obtained by observing 30 random primary particles of the silicon oxide represented by SiOx (0<X<2) shown in an SEM image of a cross-section of the negative electrode active material formed using the FIB method or the Ar ion milling method, measuring the diameters (long diameters) of the respective primary particles, and computing the average value of the diameters.

The negative electrode active material can be manufactured using the following method. The negative electrode active material can be obtained by mixing a carbon precursor which serves as a raw material of a carbon material, a SiOx precursor which serves as a raw material of silicon oxide represented by SiOx (0<X<2), a void-forming agent added as necessary to form voids in the negative electrode active material, a curing agent, and the like, and carrying out a carbonization treatment.

Through the carbonization treatment, the carbon precursor turns into the carbon material, the SiOx precursor reacts with the carbon precursor or turns into the silicon oxide, thereby generating composite particles containing the carbon material and the silicon oxide represented by SiOx (0<X<2). Furthermore, through the carbonization treatment, the void-forming agent is fully burned, or the void-forming agent is burned while leaving some residue, thereby obtaining a negative electrode active material having voids.

The method for mixing the SiOx precursor, the carbon precursor, the void-forming agent added as necessary, and additives such as the curing agent is not particularly limited, and it is possible to employ fusion or solution mixing using a stirrer such as a homodisper or a homogenizer; crushing and mixing using a crusher such as a centrifugal crusher, a free mill or a jet mill; kneading and mixing using a mortar or a muddler; and the like. The mixing order is also not particularly limited. It is possible to mix a particle mixture obtained by mixing the SiOx precursor and the void-forming agent, and the carbon precursor using a solvent, thereby producing a slurry-form mixture, or to mix the carbon precursor with the particle mixture, and cure the carbon precursor, thereby forming a solid form. In addition, in the above-described slurry, when the carbon precursor is a liquid, the solvent may not be used.

The apparatus for the carbonization treatment is not particularly limited, and any one of a rotary kiln, a vertical shaft kiln, a batch-type heating furnace, a spraying and thermal decomposition apparatus, and a spray dryer, or an apparatus obtained by combining the above-described apparatuses can be used. Among the above-described apparatuses, the spraying and thermal decomposition apparatus and the spray dryer are preferable since it is easy to control the particle shape and the particle diameter.

The heating temperature for the carburation treatment may be appropriately set preferably in a range of 400°C to 1400°C, and more preferably in a range of 600°C to 1300°C. In addition, the carbonization treatment may be carried out in a reducing atmosphere such as argon, nitrogen or carbon dioxide.

Furthermore, when the carbonization treatment is carried out in two or more separated phases, it is possible to control the properties of the obtained resin carbon materials. For example, it is possible to primarily carbonize the carbon material at a temperature in a range of 150°C to 700°C, and then treat (secondarily carbonize) the carbon material at a temperature of 800°C or higher.

The SiOx precursor is not particularly limited, and it is possible to use a derived substance obtained by hydrolyzing a compound such as silica, tetraalkoxysilane, trialkoxysilane, an oligomer thereof or tetrachlorosilane. In consideration of ease of procurement and economic efficiency, silica is preferable. In a case in which silica is used as a raw material of the silicon oxide, colloidal silica, which is an aqueous dispersion of silica, is preferable from the viewpoint of environmental responsiveness and costs while not limited thereto.

Examples of the carbon precursor include easily graphitized materials or barely graphitized materials selected from a group consisting of petroleum pitch, coal pitch, phenol resins, furan resins, epoxy resins and polyacrylonitrile. A mixture of an easily graphitized material and a barely graphitized material may be used. In addition, a curing agent (for example, hexamethylene tetramine) may be added to a phenol resin and the like, and, in this case, the curing agent also forms a part of the carbon precursor.

The void-forming agent is the same as in the first embodiment.

### [Negative electrode compound for lithium ion secondary batteries]

The negative electrode compound for lithium ion secondary batteries according to the second embodiment of the invention is the same as in the first embodiment.

### [Negative electrode for lithium ion secondary batteries]

The negative electrode for lithium ion secondary batteries according to the second embodiment of the invention is the same as in the first embodiment.

### [Lithium ion secondary battery]

The lithium ion secondary battery according to the second embodiment of the invention is the same as in the first embodiment.

Hereinafter, the second embodiment of the invention will be described in detail based on examples and comparative examples, but the invention is not limited thereto.

### (Example 5)

### 1) Manufacturing of the negative electrode active material for lithium ion secondary batteries

A phenol resin (manufactured by Sumitomo Bakelite Co., Ltd., PR55743, 50 wt% aqueous solution, 12 g) as the carbon precursor, colloidal silica (manufactured by Nissan Chemical Industries, Ltd., SNOTEX OS, average particle diameter in a range of 8 nm to 11 nm, 20 wt% aqueous solution, 30 g) as the SiOx precursor, styrene butadiene rubber latex (manufactured by JSR Corporation, TRD 102A, 1 g) as the void-forming agent, and ion exchange water (541 g) were mixed and stirred in a flask, thereby obtaining a mixture.

Next, the mixture was sprayed using an ultrasonic atomizer apparatus (ultrasonic atomizer unit: produced by the inventors using HM-2412 manufactured by Honda Electronics Co., Ltd.), thereby generating liquid droplets.

The liquid droplets were transported to a furnace in a nitrogen flow, primarily carbonized at 300°C for 20 minutes, and, furthermore, a carbonization treatment was carried out at 1000°C for 5 hours. Then, a negative electrode active material for lithium ion secondary batteries was obtained.

### 2) Evaluation of the negative electrode active material for lithium ion secondary batteries

The obtained negative electrode active material was observed using a scanning electron microscope (SEM) (manufactured by JEOL Ltd., JSM-7401F), and the average particle diameter of the negative electrode active material, the void area ratio, the average diameter of the voids, the average particle diameter of the primary particles of the silicon oxide represented by SiOx (0<X<2), and the depth of the uneven structure in the negative electrode active material were confirmed.

Meanwhile, the average particle diameter of the negative electrode active material was measured in the following manner. The produced mother body of carbon powder was mixed well, then, approximately 0.3 g of the carbon powder was sampled at each of 5 randomly-selected places, the sample carbon powder was mixed again, 0.5 g of the sample was spread onto a plate to which a double-stick tape had been attached, SEM observation was carried out, 30 randomly-selected particles shown in a SEM image were observed, the particle diameters were obtained, and the average value of the particle diameters was used as the average particle diameter.

In addition, regarding the void area ratio, the average diameter of the voids, the average particle diameter of the primary particles of the silicon oxide, and the uneven structure in the negative electrode active material, 30 randomly-selected voids, 30 randomly-selected primary particles of the silicon oxide, 30 randomly-selected uneven structures of the negative electrode active material were observed, the particle diameters (long diameters) and the depths were measured respectively, and the average values of the particle diameters and the depths were used as the average particle diameter and the average depth.

In addition, the temperature was raised from room temperature to 800°C at a temperature-rise rate of 10°C/minute using a simultaneous thermo gravimetry and differential thermal analyzer (TG/DTA) (manufactured by Seiko Instruments Inc., TG/DTA 6200), and the fraction of the silicon oxide represented by SiOx (0<X<1) in the negative electrode active material was confirmed from the weight decrease.

### 3) Production of the electrode compound for lithium ion secondary batteries

The above-described negative electrode active material for lithium ion secondary batteries, carboxy methyl cellulose (CMC) (manufactured by Daicel FineChem Ltd., CMC Daicel 2200) which is a commercially available binder, and acetylene black (DENKA BLACK manufactured by Denki Kagaku Kogyo Kabushiki Kaisha) as the conducting assistant were mixed in a mass ratio of 100:5:5, condensed as necessary, and the viscosity was adjusted, thereby obtaining an electrode compound for lithium ion secondary batteries.

Specifically, first, a predetermined amount of CMC was dissolved in water, thereby preparing a 2% by mass aqueous solution. Next, a predetermined amount of the negative electrode active material and the conducting assistant were added to the CMC aqueous solution so as to make the above-described mass ratio, stirred and mixed using a planetary centrifugal mixer. During the stirring and mixing, a small amount of water was added to the planetary centrifugal mixer so that the final viscosity became 5000 mPa·sec.

### 4) Production of the electrode (negative electrode) for lithium ion secondary batteries

The above-described electrode compound for lithium ion secondary batteries was applied to a 20 µm-thick copper foil, and then dried at 110° for 1 hour in a vacuum. After the vacuum drying, the electrode compound was pressurized through roll pressing, and punched at a diameter of φ13 mm, thereby obtaining an electrode for lithium ion secondary batteries.

### 5) Production of the lithium ion secondary battery

The above-produced electrode (negative electrode) for lithium ion secondary batteries, a separator (polypropylene porous film: diameter φ of 16 and a thickness of 25 µm), and lithium metal (diameter φ of 12 and a thickness of 1 mm) as a working electrode were sequentially disposed at a predetermined location in a 2032-type coin cell manufactured by Hohsen Corp.. Furthermore, a solution obtained by dissolving lithium perchlorate at a concentration of 1 [mol/liter] was injected into a liquid mixture of ethylene carbonate and diethylene carbonate (having a volume ratio of 1:1) as the electrolytic solution, thereby producing a lithium ion secondary battery.

### (Example 6)

A negative electrode active material for lithium ion secondary batteries was obtained in the same manner as in Example 5 except for the fact that styrene butadiene rubber latex (manufactured by JSR Corporation, TRD 102A, 9 g) was used instead of the styrene butadiene rubber latex (manufactured by JSR Corporation, TRD 102A, 1 g) as the void-forming agent, and a lithium ion secondary battery was produced.

### (Example 7)

A negative electrode active material for lithium ion secondary batteries was obtained in the same manner as in Example 5 except for the fact that styrene butadiene rubber latex (manufactured by JSR Corporation, TRD 2001, 1 g) was used instead of the styrene butadiene rubber latex (manufactured by JSR Corporation, TRD 102A, 1 g) as the void-forming agent as described in Table 2, and a lithium ion secondary battery was produced.

### (Example 8)

A negative electrode active material for lithium ion secondary batteries was obtained in the same manner as in Example 5 except for the facts that colloidal silica (manufactured by Nissan Chemical Industries, Ltd., SNOTEX OL, average particle diameter in a range of 40 nm to 50 nm, 20 wt% aqueous solution, 30 g) was used instead of the colloidal silica (manufactured by Nissan Chemical Industries, Ltd., SNOTEX OS, average particle diameter in a range of 8 nm to 11 nm, 20 wt% aqueous solution, 30 g) as the SiOx precursor, and styrene butadiene rubber latex (manufactured by JSR Corporation, TRD 102A, 3 g) was used instead of the styrene butadiene rubber latex (manufactured by JSR Corporation, TRD 102A, 1 g) as the void-forming agent as described in Table 2, and a lithium ion secondary battery was produced.

### (Example 9)

A negative electrode active material for lithium ion secondary batteries was obtained in the same manner as in Example 5 except for the facts that a phenol resin (manufactured by Sumitomo Bakelite Co., Ltd., PR55743, 50 wt% aqueous solution, 48 g) was used instead of the phenol resin (manufactured by Sumitomo Bakelite Co., Ltd., PR55743, 50 wt% aqueous solution, 12 g), and ion exchange water (1300 g) was used instead of the ion exchange water (541 g) as described in Table 2, and a lithium ion secondary battery was produced.

**[Table 2]**

| | 50% aqueous solution of phenol resin | Aqueous dispersion of colloidal silica | | Void-forming agent | | Ion exchange water | Primary carbonization | Secondary carbonization |
|---|---|---|---|---|---|---|---|---|
| | Blended amount (g) | Particle diameter (nm) | Blended amount (g) | Kind | Blended amount (g) | Blended amount (g) | Heating temperature (°C) | Heating temperature (°C) |
| Example 5 | 12 | 8 to 11 | 30 | TRD102 A | 1 | 541 | 300 | 1000 |
| Example 6 | 12 | 8 to 11 | 30 | TRD102 A | 9 | 541 | 300 | 1000 |
| Example 7 | 12 | 8 to 11 | 30 | TRD200 1 | 1 | 541 | 300 | 1000 |
| Example 8 | 12 | 40 to 50 | 30 | TRD102 A | 1 | 541 | 300 | 1000 |
| Example 9 | 48 | 8 to 11 | 30 | TRD102 A | 1 | 1300 | 300 | 1000 |

### (Comparative Example 3)

A negative electrode active material for lithium ion secondary batteries was obtained in the same manner as in Example 5 except for the fact that the void-forming agent was not added, and a lithium ion secondary battery was produced.

### (Comparative Example 4)

A negative electrode active material for lithium ion secondary batteries was obtained in the same manner as in Example 5 except for the fact that the colloidal silica was not added, and a lithium ion secondary battery was produced.

For the secondary batteries of Examples 5 to 9 and Comparative Examples 3 and 4 which were obtained as described above, the discharge characteristics and the cycle characteristics were evaluated using the evaluation methods described below.

### (Evaluation of the initial charge and discharge characteristics)

The charge and discharge characteristics were evaluated by carrying out constant current charging at a current density set to 25 mA/g during discharging, carrying out constant voltage discharging at 2.5 V from when the potential reached 2.5 V, and using the amount of electricity discharged until the current density reached 1.25 mA/g as the discharge capacity. Meanwhile, the discharge characteristics were evaluated using a charge and discharge characteristic evaluator (manufactured by Hokuto Denko Corp.: HJR-1010mSM8).

### (Evaluation of the charge and discharge cycle characteristics)

A discharge capacity measured after repeating the evaluation conditions for the initial charge and discharge characteristics 50 times was used as the discharge capacity at the 50^{th} cycle. In addition, the charge and discharge cycle characteristics (capacity maintenance rate after 50 cycles) were defined using the following formula.

Cycle property (%, capacity maintenance rate after 50 cycles)=discharge capacity at 50^{th} cycle (mAh/g)/initial discharge capacity (mAh/g)×100

### (Evaluation criteria of the initial charge and discharge characteristics)

A: The discharge capacity is 600 mAh/g or more.
B: The discharge capacity is in a range of 400 mAh/g to less than 600 mAh/g.
C: The discharge capacity is in a range of 200 mAh/g to less than 400 mAh/g.
D: The discharge capacity is in a range of 0 mAh/g to less than 200 mAh/g.

### (Evaluation criteria of the charge and discharge cycle property)

A: The capacity maintenance rate after 50 cycles is 95% or more.
B: The capacity maintenance rate after 50 cycles is 90% to less than 95%.
C: The capacity maintenance rate after 50 cycles is 80% to less than 90%.
D: The capacity maintenance rate after 50 cycles is less than 80%.

The evaluation results of the respective examples and the respective comparative examples are described in Table 3.

**[Table 3]**

| | Void area ratio (S₁/S₂) | Average diameter of voids (nm) | Particle diameter of negative electrode active material (µm) | Primary particle diameter of silicon oxide (nm) | Content of silicon oxide (% by weight) | Depth of surface unevenness (nm) | Discharge characteristics | Charge and discharge cycle characteristics |
|---|---|---|---|---|---|---|---|---|
| Example 5 | 0.04 | 100 | 3 | 5 | 83 | 100 | A | A |
| Example 6 | 0.45 | 100 | 3 | 5 | 83 | 100 | B | A |
| Example 7 | 0.20 | 400 | 3 | 5 | 83 | 100 | A | B |
| Example 8 | 0.20 | 100 | 3 | 40 | 83 | 100 | A | B |
| Example 9 | 0.05 | 100 | 3 | 5 | 54 | 100 | B | A |
| Comparative Example 3 | 0 | 0 | 3 | 5 | 83 | 100 | C | D |
| Comparative Example 4 | 0.05 | 100 | 3 | 5 | 0 | 100 | D | C |

As is evident from Table 3, Examples 5 to 9 exhibited high charge and discharge characteristics and high charge and discharge cycle characteristics, but Comparative Examples 3 and 4 resulted in insufficient charge and discharge characteristics and insufficient charge and discharge cycle characteristics compared with Examples 5 to 9.

From what has been described above, it was confirmed that the invention provides a negative electrode active material for lithium ion secondary batteries, a negative electrode compound for lithium ion secondary batteries, a negative electrode for lithium ion secondary batteries, and a lithium ion secondary battery which can provide lithium ion secondary batteries having a further improved charge and discharge capacity density and further improved charge and discharge cycle characteristics.

### (Third embodiment)

Hereinafter, a composition, a carbon composite for negative electrode materials of lithium ion secondary batteries, a negative electrode compound for lithium ion secondary batteries, a negative electrode for lithium ion secondary batteries, and a lithium ion secondary battery according to a third embodiment of the invention will be described in detail.

The composition according to the third embodiment of the invention is a composition that configures a carbon composite for negative electrode materials of lithium ion secondary batteries, containing silica particles and phenol particles, in which, when the actual carbon ratio of the thermally-treated phenol resin is represented by A% by weight, the content of the silica particles with respect to the total weight of the silica particles and the phenol resin is in a range of 100A/(100+A)% by weight to 4900A/(100+49A)% by weight.

The carbon composite for negative electrode materials of lithium ion secondary batteries according to the third embodiment of the invention is obtained by mixing and carrying out a thermal treatment on the above-described composition.

The negative electrode compound for lithium ion secondary batteries according to the third embodiment of the invention contains the above-described carbon composite for negative electrode materials of lithium ion secondary batteries and a binder.

The negative electrode for lithium ion secondary batteries according to the third embodiment of the invention contains the above-described negative electrode compound for lithium ion secondary batteries.

The lithium ion secondary battery according to the third embodiment of the invention includes the above-described negative electrode for lithium ion secondary batteries.

### [Composition]

First, the composition according to the third embodiment of the invention will be described.

The composition according to the third embodiment of the invention is a composition that has not yet been thermally treated and is used to form a carbon composite for negative electrode materials of lithium ion secondary batteries, contains silica particles and a phenol resin, in which, when the actual carbon ratio of the thermally-treated phenol resin is represented by A% by weight, the content of the silica particles with respect to the total weight of the silica particles and the phenol resin is in a range of 100A/(100+A)% by weight to 4900A/(100+49A)% by weight.

The silica particles contained in the composition is preferably silica particles that are reduced by a thermal treatment so as to turn into silicon oxide represented by SiOx (0<X<2), and exhibit a high charge and discharge capacity density in lithium ion secondary batteries. The silica particles are not particularly limited, but colloidal silica which is a dispersion obtained by dispersing silica particles in a dispersion medium such as water is preferably used from the viewpoint of environmental responsiveness, costs, and ease of spraying.

The silica particles are not particularly limited, but the content ratio of sodium ions extracted using ion chromatography is preferably 5% by weight or less, more preferably 3% by weight or less, and most preferably 1% by weight or less of all the silica particles. In a case in which the content ratio of the sodium ions exceeds the above-described upper limit value, the amount of the sodium ions is too large such that there is a case in which the silica particles are not sufficiently reduced, and a sufficient charge and discharge capacity cannot be obtained. Here, the content ratio of the sodium ions extracted using ion chromatography can be computed as an amount of ions eluted from a specimen by, for example, introducing a hydrothermal extraction liquid and a standard solution into an ion chromatography apparatus (DIONEX ICS-2000-type ion chromatograph), and obtaining the concentration of the sodium ion using a calibration curve method.

The average particle diameter of the silica particles is not particularly limited, but is preferably in a range of 1 nm to 50 nm, more preferably in a range of 5 nm to 30 nm, and most preferably in a range of 7 nm to 20 nm. When the average particle diameter of the silica particles is less than the above-described lower limit value, there is a case in which, in the above-described thermal treatment, components such as SiC are generated, the reduction reaction of the silica particles does not sufficiently proceed, and it is impossible to obtain a lithium ion secondary battery exhibiting a high charge and discharge capacity density. In addition, when the average particle diameter of the silica particles exceeds the above-described upper limit value, the reduction reaction of the silica particles does not proceed in the carbon composite for negative electrode materials of lithium ion secondary batteries such that there is a case in which, when a lithium ion secondary battery is produced, a sufficiently high charge and discharge capacity density is not developed or the silicon oxide represented by SiOx (0<X<2) which has been reduced from the silica particles is returned to SiO₂ due to the influence of the remaining components so as to decrease the charge and discharge capacity density.

Here, the average particle diameter of the silica particles can be measured using a dynamic light scattering apparatus (for example, ZETASIZER NANO ZS manufactured by Malvern Instruments Ltd.) in a case in which the average particle diameter is less than 100 nm. In this case, the Z average particle diameter was specified as the average particle diameter. In addition, the average particle diameter can be measured using a laser diffraction-type particle size distribution measurement apparatus (for example, LA-920 manufactured by Horiba Ltd.) in a case in which the average particle diameter is 100 nm or more. In this case, a particle diameter at which the frequency becomes 50% in terms of volume was specified as the average particle diameter D50%.

The content of the silica particles is not particularly limited; however, since the content of the silica particles has an influence on the actual carbon ratio of the thermally-treated phenol resin, when the actual carbon ratio of the thermally-treated phenol resin is represented by A% by weight, the content of the silica particles with respect to the total weight of the silica particles and the phenol resin in the composition is preferably in a range of 100A/(100+A)% by weight to 4900A/(100+49A)% by weight, more preferably in a range of 700A/(300+7A)% by weight to 1900A/(100+19A)% by weight, and most preferably in a range of 100A/(25+A)% by weight to 9300A/(700+93A)% by weight. In a case in which the content of the silica particles is less than the above-described lower limit value, there is a case in which a sufficient amount of the silica particles is not loaded, and a sufficient charge and discharge capacity cannot be obtained. In addition, in a case in which the content of the silica particles exceeds the above-described upper limit value, the silica particles are fused to each other such that the carbon network generated by the carbonization of the phenol resin cannot be sufficiently ensured, and it is not possible to sufficiently reduce the silica particles such that there is a case in which a sufficient charge and discharge capacity cannot be obtained.

The actual carbon ratio A of the thermally-treated phenol resin can be computed using actual carbon ratio A=((b×c)/(a×d))×100 in which the amount of the loaded phenol resin is represented by a, the amount of the loaded silica particles is represented by b, the weight of the carbon composite reduced in a case in which the thermally-treated carbon composite is heated from room temperature to 800°C at a temperature-rise rate of 10°C/minute using a simultaneous thermo gravimetry and differential thermal analyzer (TG/DTA) (manufactured by Seiko Instruments Inc., TG/DTA 6200) is represented by c, and the weight of the remaining carbon composite is represented by d. The amount of the loaded phenol resin can be computed by, for example, in the case of a water-soluble phenol resin, obtaining the weight fraction (% by weight) of all resin components contained in the system as the concentration of the resin components from the measurement results of GPC, and multiplying the weight fraction by the weight of a water-soluble phenol resin being used. In addition, the amount of the loaded silica particles can be computed by, for example, in the case of colloidal silica, drying a predetermined amount of an aqueous solution of colloidal silica, obtaining the concentration of silica particles from the weight of the remaining solid content, and multiplying the concentration of silica particles by the aqueous solution of colloidal silica being used.

The phenol resin contained in the composition is carbonized through a thermal treatment. The carbonized phenol resin exhibits an effect that supplies conductivity in lithium ion secondary batteries. Any compound having one or more phenolic hydroxyl groups in the molecule can be used as the phenol resin, and examples thereof include novolac resins such as novolac-type phenol, novolac-type cresol and novolac-type naphtol; bisphenol resins such as bisphenol F and bisphenol A; phenol aralkyl resins such as paraxylene-denatured phenol resin; resole-type phenol resins such as dimethylene ether-type resole and methylol-type phenol; compounds obtained by further methylolating the above-described resin; lignin, lignin derivatives and decomposed lignin having one or more phenolic hydroxyl groups; substances obtained by denaturing lignin, a lignin derivative or a decomposed lignin; and substances containing a mixture of the above-described substance and a phenol resin manufactured from a petroleum resource. In addition, the phenol resin may be a mixture of the above-described substances, and may contain a urea resin, sodium hydroxide and the like which are generated in a phenol resin synthesis and generation phase. Among the above-described substances, a water-soluble phenol resin is preferably used from the viewpoint of environment responsiveness, costs and ease of mixing the void-forming agent.

The phenol resin is not particularly limited, but the actual carbon ratio of the thermally-treated phenol resin is preferably in a range of 10% by weight to 40% by weight, and more preferably in a range of 15% by weight to 30% by weight. In a case in which the actual carbon ratio of the thermally-treated phenol resin is less than the above-described lower limit value, the presence of voids decreases the mechanical strength of the carbon composite, and there is a case in which the cycle characteristics are not sufficient. In addition, there is an excessive amount of volatile components during the thermal treatment such that it is not possible to sufficiently reduce the silica particles and a sufficient charge and discharge capacity cannot be obtained. On the other hand, in a case in which the actual carbon ratio of the thermally-treated phenol resin exceeds the above-described upper limit value, a sufficient number of voids cannot be formed in the thermally-treated carbon composite, and there is a case in which the charge and discharge cycle characteristics deteriorate.

In addition to the phenol resin, coke or polyvinyl chloride, which is a graphite precursor, exhibits the effect that supplies conductivity when carbonized, but coke or polyvinyl chloride coal requires a high temperature of 2500°C or higher for the thermal treatment, and, in this case, since the silica particles are not reduced but crystallized, a high charge and discharge capacity density is not exhibited. In contrast, in a case in which the phenol resin is used, the temperature necessary for the thermal treatment is a relatively low temperature (in a range of 400°C to 1400°C), and, in this case, the reduction reaction of the silica particles sufficiently proceeds, and it is possible to obtain a lithium ion secondary battery exhibiting a high charge and discharge capacity density.

The content of the phenol resin is not particularly limited; however, since the content of the phenol resin has an influence on the actual carbon ratio of the thermally-treated phenol resin, when the actual carbon ratio of the thermally-treated phenol resin is represented by A% by weight, the content of the phenol resin with respect to the total weight of the silica particles and the phenol resin in the composition is preferably in a range of 100-[4900A/(100+49A)]% by weight to 100-[100A/(100+A)]% by weight, more preferably in a range of 100-[1900A/(100+19A)]% by weight to 100-[700A/(300+7A)]% by weight, and most preferably in a range of 100-[9300A/(700+93A)]% by weight to 100-[100A/(25+A)]% by weight.

The phenol resin is not particularly limited, but the content ratio of sodium ions extracted from the silica particles using ion chromatography is preferably 5% by weight or less, more preferably 3% by weight or less, and most preferably 1% by weight or less of the entire phenol resin. In a case in which the content ratio of the sodium ions exceeds the above-described upper limit value, the amount of the sodium ions is too large such that there is a case in which the silica particles are not sufficiently reduced, and a sufficient charge and discharge capacity cannot be obtained. Here, the content ratio of the sodium ions extracted using ion chromatography can be computed as an amount of ions eluted from a specimen by, for example, introducing a hydrothermal extraction liquid and a standard solution into an ion chromatography apparatus (DIONEX ICS-2000-type ion chromatograph), and obtaining the concentration of the sodium ion using a calibration curve method.

The composition may contain the void-forming agent, and, when the void-forming agent is volatilized due to the above-described thermal treatment, voids are formed in the carbon composite for negative electrode materials of lithium ion secondary batteries. Then, it is possible to improve the cycle characteristics of the lithium ion secondary batteries. The kind of void-forming agent is the same as in the first embodiment.

The content of the void-forming agent is not particularly limited, but the content of the void-forming agent is preferably in a range of 1% by weight to 50% by weight, and more preferably in a range of 5% by weight to 10% by weight with respect to the total weight of the silica particles and the void-forming agent. When the content of the void-forming agent is less than the above-described lower limit value, voids are not sufficiently formed in the carbon composite, and there is a case in which it is not possible to suppress the expansion of the carbon composite due to the absorption of lithium ions. In addition, when the content of the void-forming agent exceeds the above-described upper limit value, the presence of voids decreases the mechanical strength of the carbon composite, and there is a case in which the cycle characteristics are not sufficient.

The average particle diameter of the void-forming agent is not particularly limited, but is preferably in a range of 10 nm to 1000 nm, and more preferably in a range of 20 nm to 800 nm. When the average particle diameter of the void-forming agent is less than the above-described lower limit value, there is a case in which it is not possible to suppress the expansion and contraction of the carbon composite due to the absorption of lithium ions. In addition, when the average particle diameter of the void-forming agent exceeds the above-described upper limit value, the presence of voids decreases the mechanical strength of the carbon composite, and there is a case in which the cycle characteristics are not sufficient.

Here, the average particle diameter of the void-forming agent can be measured using a dynamic light scattering apparatus (for example, ZETASIZER NANO ZS manufactured by Malvern Instruments Ltd.) in a case in which the average particle diameter is less than 100 nm. In this case, the Z average particle diameter was specified as the average particle diameter. In addition, the average particle diameter can be measured using a laser diffraction-type particle size distribution measurement apparatus (for example, LA-920 manufactured by Horiba Ltd.) in a case in which the average particle diameter is 100 nm or more. In this case, a particle diameter at which the frequency becomes 50% in terms of volume was specified as the average particle diameter D50%.

The composition may further contain additives such as a phenol resin-curing agent (for example, hexamethylene tetramine), and, in this case, the additive can also form a part of the carbon composite. In addition, the composition may be dispersed in a dispersion medium such as water so as to be made into a slurry form, and the composition may contain a dispersion medium or the like for what has been described above.

### [Carbon composite for negative electrode materials of lithium ion secondary batteries]

Next, the carbon composite for negative electrode materials of lithium ion secondary batteries of the invention will be described.

The carbon composite for negative electrode materials of lithium ion secondary batteries of the invention is obtained by mixing and carrying out a thermal treatment on the above-described composition.

The method for mixing the composition containing the silica particles and the phenol resin is not particularly limited, and it is possible to employ fusion or solution mixing using a stirrer such as a homodisper or a homogenizer; crushing and mixing using a crusher such as a centrifugal crusher, a free mill or a jet mill; kneading and mixing using a mortar or a muddler; and the like. The order of mixing the silica particles and the phenol resin is also not particularly limited. It is possible to mix the silica particles and the phenol resin so as to produce a precursor, and then produce a slurry-form mixture using a solvent, or to mix the silica particles and the phenol resin, and cure the phenol resin, thereby forming a solid form. In addition, in the above-described slurry, when the phenol resin is a liquid, the solvent may not be used.

The thermal treatment temperature for making the mixture into the carbon composite for negative electrode materials of lithium ion secondary batteries (hereinafter, referred to as carbon composite) is preferably in a range of 400°C to 1400°C, more preferably in a range of 600°C to 1300°C, and most preferably in a range of 800°C to 1100°C. The temperature-rise rate until the above-described heating temperature is reached is not particularly limited, but it is preferable to appropriately set the temperature-rise rate preferably in a range of 0.5°C/hour to 600°C/hour, and more preferably in a range of 20°C/hour to 300°C/hour. It is preferable to appropriately set the holding time at the above-described thermal treatment temperature to preferably 48 hours or less and more preferably in a range of 1 hour to 12 hours. In addition, the thermal treatment is preferably carried out in a reducing atmosphere such as argon, nitrogen or carbon dioxide. Furthermore, the thermal treatment is preferably carried out in two or more separated phases since it is possible to control the properties of the obtained carbon composite. For example, it is preferable to treat (primarily carbonize) the carbon composite at a temperature in a range of 200°C to 800°C for approximately several seconds to 6 hours, then, crush the carbon composite as necessary, and, furthermore, treat (secondarily carbonize) the carbon composite at a temperature in a range of 800°C to 1200°C.

The carbon composite contains the silicon oxide represented by SiOx (0<X<2) at a mass ratio preferably in a range of 50% by weight to 98% by weight, more preferably in a range of 70% by weight to 95% by weight, and still more preferably in a range of 80% by weight to 93% by weight with respect to the carbon composite. When the content of the silicon oxide represented by SiOx (0<X<2) is less than the lower limit value, there is a case in which only a small amount of lithium ions are absorbed, and a high charge and discharge capacity cannot be obtained. On the other hand, when the content exceeds the upper limit value, the effect of the carbonized phenol resin that supplies conductivity becomes weak such that there is a concern that the charge and discharge cycle characteristics may degrade.

The content of the silicon oxide represented by SiOx (0<X<2) was obtained by raising the temperature from room temperature to 800°C at a temperature-rise rate of 10°C/minute using a simultaneous thermo gravimetry and differential thermal analyzer (TG/DTA) (manufactured by Seiko Instruments Inc., TG/DTA 6200), and computing the weight ratio of carbon to silicon oxide represented by SiOx (0<X<1) from the weight decrease.

The carbon composite is not particularly limited, but the content ratio of sodium ions extracted using ion chromatography is preferably 5% by weight or less, more preferably 3% by weight or less, and most preferably 1% by weight or less of the entire carbon composite. In a case in which the content ratio of the sodium ions exceeds the above-described upper limit value, the amount of the sodium ions is too large such that there is a case in which the silica particles are not sufficiently reduced, and a sufficient charge and discharge capacity cannot be obtained. Here, the content ratio of the sodium ions extracted using ion chromatography can be computed as an amount of ions eluted from a specimen by, for example, introducing a hydrothermal extraction liquid and a standard solution into an ion chromatography apparatus (DIONEX ICS-2000-type ion chromatograph), and obtaining the concentration of the sodium ion using a calibration curve method.

The carbon composite preferably has voids therein. The voids absorb the expansion of the volume of the silicon oxide represented by SiOx (0<X<2), thereby preventing the breakage of negative electrodes, and exhibiting an excellent effect that improves the cycle characteristics.

When the void area ratio is represented by S1/S2 in which the area of the voids on a cross-section of the carbon composite is represented by S1 and the area of the cross-sections of the carbon composite is represented by S2, the void area ratio is not particularly limited, but is preferably in a range of 0.03 to 0.5, and more preferably in a range of 0.04 to 0.4. When the void area ratio is in the above-described range, the expansion and contraction of the particles containing SiOx (0<X<2) caused by charge and discharge is suppressed, and the cycle characteristics improve.

The void area ratio can be obtained by measuring the area of the voids with respect to the cross-sections (the cut area of the negative electrode active material computed with an assumption that there is no void) when the negative electrode active material forms an arbitrary cross-section using a focused ion beam method (hereinafter, referred to as FIB method) or an Ar ion milling method.

For example, the void area ratio can be obtained by binarizing an SEM image of a cross-section of the particles formed using the FIB method, and obtaining the area of the voids.

In addition, the average diameter of the voids on the cross-section of the negative electrode active material is not particularly limited, but is preferably in a range of 20 nm to 500 nm, and more preferably in a range of 50 nm to 350 nm. When the average diameter of the voids is within the above-described preferable range, it is possible to effectively absorb the expansion and contraction of the negative electrode active material containing SiOx (0<X<2) caused by charge and discharge, and to suppress a decrease in the mechanical strength of the negative electrode active material due to the presence of the voids, and an excellent effect that improves the cycle characteristics is exhibited.

The average diameter of the voids on a cross-section of the negative electrode active material was measured in the following manner. Thirty randomly-selected voids shown in a SEM image of a cross-section of the negative electrode active material formed using the FIB method or the Ar ion milling method were observed, the diameters (long diameters) were measured, and the average value of the diameters was used as the average diameter of the voids.

### [Negative electrode compound for lithium ion secondary batteries]

Next, the negative electrode compound for lithium ion secondary batteries of the invention will be described. The negative electrode compound for lithium ion secondary batteries of the invention is a negative electrode compound for lithium ion secondary batteries containing the carbon composite for negative electrode materials of lithium ion secondary batteries and a binder.

The negative electrode compound for lithium ion secondary batteries according to the invention contains the above-described carbon composite for negative electrode materials of lithium ion secondary batteries, and therefore it is possible to produce the negative electrode compound for negative electrode materials of lithium ion secondary batteries according to the invention using the carbon composite for negative electrode materials of lithium ion secondary batteries according to the invention which is obtained as described above as the negative electrode active material. The negative electrode compound for lithium ion secondary batteries according to the invention may be prepared using a well-known method of the related art, or can be prepared as a slurry having a predetermined viscosity obtained by adding a binder, a conducting agent and the like to the above-described negative electrode material for lithium ion secondary batteries as the negative electrode active material and using an appropriate solvent or dispersion medium.

The binder used to produce the negative electrode compound for lithium ion secondary batteries is the same as the binder according to the first embodiment.

### [Negative electrode for lithium ion secondary batteries]

The negative electrode for lithium ion secondary batteries according to the third embodiment of the invention is the same as in the first embodiment.

### [Lithium ion secondary battery]

The lithium ion secondary battery according to the third embodiment of the invention is the same as in the first embodiment.

Hereinafter, examples for more specifically describing the third embodiment of the invention will be provided. Meanwhile, the invention is not limited to the following examples within the scope of the purpose of the invention.

### (Example 10)

### 1) Mixing step

A water-soluble phenol resin (manufactured by Sumitomo Bakelite Co., Ltd., PR55743, 50 wt% aqueous solution, 12 g) as the phenol resin, colloidal silica (manufactured by Nissan Chemical Industries, Ltd., SNOTEX OS, average particle diameter in a range of 8 nm to 11 nm, 20 wt% aqueous solution, 30 g) as the silica particles, styrene butadiene rubber latex (manufactured by JSR Corporation, TRD 2001, average particle diameter of 150 nm, 48 wt% aqueous solution, 1 g) as the void-forming agent, and ion exchange water (541 g) were mixed and stirred in a flask, thereby obtaining a mixture.

### 2) Spraying step

The mixture was sprayed using an ultrasonic atomizer apparatus (ultrasonic atomizer unit: produced by the inventors using HM-2412 manufactured by Honda Electronics Co., Ltd.), thereby generating liquid droplets.

### 3) First thermal treatment step

The liquid droplets were transported to a furnace at 300°C in a nitrogen flow, thereby carrying out a first thermal treatment step for 3 seconds. Then, the liquid droplets were dried, cured, and thermally decomposed, and a carbon precursor was trapped using an electrostatic trapping machine (high-pressure power supply: produced using HARb-15N2 manufactured by Matsusada Precision Inc.) that had been adjusted to 150°C and -10 kV.

### 4) Second thermal treatment step

The trapped carbon precursor was put into a ceramic tube, and thermally treated in a furnace at 1000°C for 6 hours in a nitrogen flow, thereby obtaining a carbon composite for negative electrode materials of lithium ion secondary batteries containing carbon and silicon oxide represented by SiOx (0<X<2).

### 5) Evaluation of the carbon composite for negative electrode materials of lithium ion secondary batteries

The obtained carbon composite was observed using a scanning electron microscope (SEM) (manufactured by JEOL Ltd., JSM-7401F), and the average particle diameter of the carbon composite was confirmed.

Meanwhile, the average particle diameter of the carbon composite was measured in the following manner. The produced mother body of carbon powder was mixed well, then, approximately 0.3 g of the carbon powder was sampled at each of 5 randomly-selected places, the sample carbon powder was mixed again, 0.5 g of the sample was spread onto a plate to which a double-stick tape had been attached, SEM observation was carried out, 30 randomly-selected particles shown in a SEM image were observed, the particle diameters were obtained, and the average value of the particle diameters was used as the average particle diameter.

In addition, the temperature was raised from room temperature to 800°C at a temperature-rise rate of 10°C/minute using a simultaneous thermo gravimetry and differential thermal analyzer (TG/DTA) (manufactured by Seiko Instruments Inc., TG/DTA 6200), and the fraction of the silicon oxide represented by SiOx (0<X<1) in the negative electrode active material and the actual carbon ratio of the phenol resin were computed from the weight decrease of the carbon composite.

Furthermore, the amount of sodium ions contained in the carbon composite was measured using ion chromatography.

### 5) Production of the electrode compound for lithium ion secondary batteries

The above-described carbon composite, carboxy methyl cellulose (CMC) (manufactured by Daicel FineChem Ltd., CMC Daicel 2200) which is a commercially available binder, and acetylene black (DENKA BLACK manufactured by Denki Kagaku Kogyo Kabushiki Kaisha) as the conducting assistant were mixed in a mass ratio of 100:7:4, condensed as necessary, and the viscosity was adjusted, thereby obtaining an electrode compound for lithium ion secondary batteries. Specifically, first, CMC was dissolved in a predetermined amount of water, thereby preparing 2% by mass of an aqueous solution. Next, a predetermined amount of the carbon composite and the conducting assistant were added to the CMC aqueous solution so as to make the above-described mass ratio, stirred and mixed using a planetary centrifugal mixer. During the stirring and mixing, a small amount of water was added to the planetary centrifugal mixer so that the final viscosity became 5000 mPa·sec.

### 4) Production of the electrode (negative electrode) for lithium ion secondary batteries

The above-described electrode compound for lithium ion secondary batteries was applied to a 20 µm-thick copper foil, and then dried at 110° for 1 hour in a vacuum. After the vacuum drying, the electrode compound was pressurized through roll pressing, and punched at a diameter of φ13 mm, thereby obtaining an electrode for lithium ion secondary batteries.

### 7) Production of the lithium ion secondary battery

The above-produced electrode (negative electrode) for lithium ion secondary batteries, a separator (polypropylene porous film: diameter φ of 16 and a thickness of 25 µm), and lithium metal (diameter φ of 12 and a thickness of 1 mm) as a working electrode were sequentially disposed at a predetermined location in a 2032-type coin cell manufactured by Hohsen Corp.. Furthermore, a solution obtained by dissolving lithium perchlorate at a concentration of 1 [mol/liter] was injected into a liquid mixture of ethylene carbonate and diethylene carbonate (having a volume ratio of 1:1) as the electrolytic solution, thereby producing a lithium ion secondary battery.

### (Example 11)

A carbon composite was obtained in the same manner as in Example 10 except for the fact that the carbon precursor obtained in the first thermal treatment step was washed before the second thermal treatment step, and a lithium ion secondary battery was produced. Meanwhile, the carbon precursor was washed in the following manner. Carbon (1 g) and ion exchange water (49 g) were put into a centrifuge tube, the tube was closed using a lid, and vibrated left and right and up and down, thereby dispersing the carbon composite in the water. It was visually checked that there was no lump of the carbon composite, the solution was centrifugally separated with 10000 times of rotation for approximately 3 minutes, and supernatants were removed. The above-described washing operation was repeated 3 times, the solution was dried in a drier at 90°C for 30 minutes and at 130°C for 1 hour, and the carbon precursor was crushed using metal balls, thereby obtaining a washed carbon composite.

### (Example 12)

A carbon composite was obtained in the same manner as in Example 10 except for the facts that the amount of the water-soluble phenol resin was set to 24 g and the amount of the ion exchange water was set to 791 g in the mixing step, and a lithium ion secondary battery was produced.

### (Example 13)

A carbon composite was obtained in the same manner as in Example 10 except for the facts that the water-soluble phenol resin was changed to a water-soluble phenol resin (manufactured by Sumitomo Bakelite Co., Ltd., 50 wt% aqueous solution) having an actual carbon ratio of 51.4 wt%, the amount of the water-soluble phenol resin was set to 10 g, and the amount of the ion exchange water was set to 500 g in the mixing step, and a lithium ion secondary battery was produced.

### (Example 14)

A carbon composite was obtained in the same manner as in Example 10 except for the facts that the water-soluble phenol resin was changed to a water-soluble phenol resin (manufactured by Sumitomo Bakelite Co., Ltd., 50 wt% aqueous solution) having an actual carbon ratio of 5.1 wt%, the amount of the water-soluble phenol resin was set to 100 g, and the amount of the ion exchange water was set to 2500 g in the mixing step, and a lithium ion secondary battery was produced.

### (Example 15)

A carbon composite was obtained in the same manner as in Example 10 except for the facts that the amount of the water-soluble phenol resin was set to 6 g, and the amount of the ion exchange water was set to 400 g in the mixing step, and a lithium ion secondary battery was produced.

### (Example 16)

A carbon composite was obtained in the same manner as in Example 10 except for the fact that the carbon precursor obtained in the first thermal treatment step was washed before the second thermal treatment step, and a lithium ion secondary battery was produced. Meanwhile, the carbon precursor was washed in the following manner. Carbon (1 g) and ion exchange water (49 g) were put into a centrifuge tube, the tube was closed using a lid, and vibrated left and right and up and down, thereby dispersing the carbon composite in the water. It was visually checked that there was no lump of the carbon composite, the solution was centrifugally separated with 10000 times of rotation for approximately 3 minutes, supernatants were removed, then, the solution was dried in a drier at 90°C for 30 minutes and at 130°C for 1 hour, and the carbon precursor was crushed using metal balls, thereby obtaining a washed carbon composite.

### (Example 17)

A carbon composite was obtained in the same manner as in Example 10 except for the facts that the amount of the water-soluble phenol resin was set to 48 g, and the amount of the ion exchange water was set to 1300 g in the mixing step, and a lithium ion secondary battery was produced.

### (Comparative Example 5)

A carbon composite was obtained in the same manner as in Example 10 except for the facts that the amount of the water-soluble phenol resin was set to 96 g, and the amount of the ion exchange water was set to 2400 g in the mixing step, and a lithium ion secondary battery was produced.

### (Comparative Example 6)

A carbon composite was obtained in the same manner as in Example 10 except for the facts that the amount of the water-soluble phenol resin was set to 0.6 g, and the amount of the ion exchange water was set to 282 g in the mixing step, and a lithium ion secondary battery was produced.

For the secondary batteries of Examples 10 to 17 and Comparative Examples 5 and 6 which were obtained as described above, the discharge characteristics and the cycle characteristics were evaluated using the evaluation methods described below.

### (Evaluation of the initial charge and discharge characteristics)

Regarding the charge capacity, constant current charging was carried out at a current density set to 25 mA/g during charging, constant voltage charging was carried out at 0 V from when the potential reached 0 V, and the amount of electricity charged until the current density reached 1.25 mA/g was used as the discharge capacity. Meanwhile, regarding the discharge capacity, constant current discharging was carried out at a current density set to 25 mA/g during discharging, and the amount of electricity discharged until the potential reached 2.5 V was used as the discharge capacity. Meanwhile, the charge and discharge characteristics were evaluated using a charge and discharge characteristic evaluator (manufactured by Hokuto Denko Corp.: HJR-1010mSM8).

### (Evaluation of the charge and discharge cycle characteristics)

A discharge capacity measured after repeating 50 times the same conditions as the evaluation conditions for the initial charge and discharge characteristics except for the fact that the cutoff potential of the discharge conditions was set to 1.5 V was used as the discharge capacity at the 50^{th} cycle. In addition, the charge and discharge cycle characteristics (capacity maintenance rate after 50 cycles) were defined using the following formula.

Cycle property (%, capacity maintenance rate after 50 cycles)=discharge capacity at 50^{th} cycle (mAh/g)/initial discharge capacity (mAh/g)×100

### (Evaluation criteria of the initial charge and discharge characteristics)

A++: The discharge capacity is 1000 mAh/g or more.
A+: The discharge capacity is in a range of 800 mAh/g to less than 1000 mAh/g.
A: The discharge capacity is in a range of 600 mAh/g to less than 800 mAh/g.
B: The discharge capacity is in a range of 400 mAh/g to less than 600 mAh/g.
C: The discharge capacity is in a range of 200 mAh/g to less than 400 mAh/g.
D: The discharge capacity is in a range of 0 mAh/g to less than 200 mAh/g.

### (Evaluation criteria of the charge and discharge cycle property)

A: The capacity maintenance rate after 50 cycles is 95% or more.
B: The capacity maintenance rate after 50 cycles is 90% to less than 95%.
C: The capacity maintenance rate after 50 cycles is 80% to less than 90%.
D: The capacity maintenance rate after 50 cycles is less than 80%.

The evaluation results of the respective examples and the respective comparative examples are described in Table 4.

**[Table 4]**

| | 50 wt% aqueous solution of phenol resin | 20 wt% aqueous dispersion of colloidal silica | | Void-forming agent | | Ion exchange water | Average particle diameter of carbon composite | Concentration of SiOx in carbon composite | Actual carbon ratio of phenol resin | Concentration of Na in carbon composite | Discharge characteristics | | Charge and discharge cycle characteristics |
|---|---|---|---|---|---|---|---|---|---|---|---|---|---|
| | Blended amount (g) | Particle diameter (nm) | Blended amount (g) | Kind | Blended amount (g) | Blended amount (g) | (µm) | (wt%) | (wt%) | (wt%) | Evaluation | Representative value (mAh/g) | Evaluation |
| Example 10 | 12 | 8 to 11 | 30 | TRD10 2A | 1 | 541 | 1 | 83 | 21.4 | 2.2 | A | 716 | A |
| Example 11 | 12 | 8 to 11 | 30 | TRD10 2A | 1 | 541 | 1 | 84 | 21.3 | 1 | A+ | 973 | A |
| Example 12 | 24 | 8 to 11 | 30 | TRD10 2A | 1 | 791 | 1 | 70 | 21.5 | 3.2 | B | 588 | A |
| Example 13 | 10 | 8 to 11 | 30 | TRD10 2A | 1 | 500 | 1 | 70 | 51.4 | 3.5 | B | 573 | C |
| Example 14 | 100 | 8 to 11 | 30 | TRD10 2A | 1 | 2500 | 1 | 70 | 5.1 | 2.8 | B | 487 | C |
| Example 15 | 6 | 8 to 11 | 30 | TRD10 2A | 1 | 400 | 1 | 90 | 21.5 | 1.7 | A+ | 906 | A |
| Example 16 | 6 | 8 to 11 | 30 | TRD10 2A | 1 | 400 | 1 | 91 | 21.3 | 0.8 | A++ | 1029 | A |
| Example 17 | 48 | 8 to 11 | 30 | TRD10 2A | 1 | 1300 | 1 | 54 | 21.2 | 4.3 | B | 436 | B |
| Comparative Example 5 | 96 | 8 to 11 | 30 | TRD10 2A | 1 | 2400 | 1 | 37 | 21.5 | 5.55 | C | 206 | C |
| Comparative Example 6 | 0.6 | 8 to 11 | 30 | TRD10 2A | 1 | 282 | 1 | 99 | 21.4 | 1.1 | D | 172 | C |

As is evident from Table 4, Examples 10 to 17 exhibited high charge and discharge characteristics and high charge and discharge cycle characteristics, but Comparative Examples 5 and 6 resulted in insufficient charge and discharge characteristics and insufficient charge and discharge cycle characteristics compared with Examples 10 to 17.

From what has been described above, it was confirmed that the invention provides a carbon composite for negative electrode materials of lithium ion secondary batteries, a negative electrode compound for lithium ion secondary batteries, a negative electrode for lithium ion secondary batteries, and a lithium ion secondary battery which can provide lithium ion secondary batteries having a further improved charge and discharge capacity density and further improved charge and discharge cycle characteristics.

### Industrial Applicability

According to the method for manufacturing a carbon material for lithium ion secondary batteries of the invention, it is possible to provide a carbon material for lithium ion secondary batteries, a negative electrode compound for lithium ion secondary batteries, a negative electrode for lithium ion secondary batteries, and a lithium ion secondary battery which can provide lithium ion secondary batteries having a further improved charge and discharge capacity density and further improved charge and discharge cycle characteristics.

In addition, the use of the negative electrode active material for lithium ion secondary batteries of the inveniton can provide a negative electrode active material for lithium ion secondary batteries, a negative electrode compound for lithium ion secondary batteries, a negative electrode for lithium ion secondary batteries, and a lithium ion secondary battery which can provide lithium ion secondary batteries having a further improved charge and discharge capacity density and further improved charge and discharge cycle characteristics.

Furthermore, the use of the composition which is used to form the carbon composite for negative electrode materials of lithium ion secondary batteries of the invention and has not yet been thermally treated can provide a carbon composite for negative electrode materials of lithium ion secondary batteries, a negative electrode compound for lithium ion secondary batteries, a negative electrode for lithium ion secondary batteries, and a lithium ion secondary battery which can provide lithium ion secondary batteries having a further improved charge and discharge capacity density and further improved charge and discharge cycle characteristics.

## Claims

1. A method for manufacturing a carbon material for lithium ion secondary batteries, comprising:
a mixing step of mixing a phenol resin and a resin composition containing silica particles so as to obtain a mixture;
a spraying step of spraying the mixture obtained in the mixing step so as to form liquid droplets;
a first thermal treatment step of carrying out a first thermal treatment on the liquid droplets obtained in the spraying step so as to generate a carbon precursor; and
a second thermal treatment step of carrying out a second thermal treatment, which is carried out at a higher temperature than the first thermal treatment, on the carbon precursor obtained in the first thermal treatment step so as to generate a carbon material containing carbon and silicon oxide represented by SiOx (0<X<2).

2. The method for manufacturing a carbon material for lithium ion secondary batteries according to Claim 1,
wherein a method for spraying the mixture is a spraying method in which at least one of a ultrasonic atomization method and a two-fluid nozzle is used.

3. The method for manufacturing a carbon material for lithium ion secondary batteries according to Claim 1 or 2,
wherein a thermal treatment temperature of the first thermal treatment step is in a range of 150°C to 800°C.

4. The method for manufacturing a carbon material for lithium ion secondary batteries according to Claim 1 or 2,
wherein a thermal treatment temperature of the second thermal treatment step is in a range of 900°C to 1200°C.

5. The method for manufacturing a carbon material for lithium ion secondary batteries according to Claim 1 or 2,
wherein the first thermal treatment step of carrying out the first thermal treatment on the liquid droplets so as to generate the carbon precursor and the second thermal treatment step of carrying out the second thermal treatment on the carbon precursor so as to generate the carbon material containing carbon and SiOx (0<X<2) are continuously carried out in the same system.

6. The method for manufacturing a carbon material for lithium ion secondary batteries according to Claim 1 or 2,
wherein the phenol resin is a water-soluble phenol resin.

7. The method for manufacturing a carbon material for lithium ion secondary batteries according to Claim 1 or 2,
wherein the silica particles are in a range of 1 nm to 50 nm.

8. The method for manufacturing a carbon material for lithium ion secondary batteries according to Claim 1 or 2,
wherein the silica particles are colloidal silica.

9. The method for manufacturing a carbon material for lithium ion secondary batteries according to Claim 1 or 2,
wherein an average particle diameter of the carbon material containing carbon and silicon oxide represented by SiOx (0<X<2) is in a range of 1 µm to 50 µm.

10. The method for manufacturing a carbon material for lithium ion secondary batteries according to Claim 1 or 2,
wherein the resin composition further contains a void-forming agent.

11. The method for manufacturing a carbon material for lithium ion secondary batteries according to Claim 10,
wherein the void-forming agent is a styrene butadiene rubber particle having an average particle diameter in a range of 1 nm to 500 nm.

12. A carbon material for lithium ion secondary batteries manufactured using the method for manufacturing a carbon material for lithium ion secondary batteries according to Claim 1 or 2.

13. A negative electrode compound for lithium ion secondary batteries comprising:
the carbon material for lithium ion secondary batteries according to Claim 12; and
a binder.

14. A negative electrode for lithium ion secondary batteries, comprising:
the negative electrode compound for lithium ion secondary batteries according to Claim 13.

15. A lithium ion secondary battery, comprising:
the negative electrode for lithium ion secondary batteries according to Claim 14.

16. A negative electrode active material for lithium ion secondary batteries comprising: silicon oxide represented by SiOx (0<X<2) and a carbon material,
wherein the negative electrode active material for lithium ion secondary batteries has voids therein.

17. The negative electrode active material for lithium ion secondary batteries according to Claim 16,
wherein, when an area of the voids on a cross-section of the negative electrode active material for lithium ion secondary batteries is represented by S1, and an area of cross-sections of particles is represented by S2, a void area ratio S1/S2 is in a range of 0.03 to 0.50.

18. The negative electrode active material for lithium ion secondary batteries according to Claim 16 or 17,
wherein a fraction of the silicon oxide in the negative electrode active material for lithium ion secondary batteries is in a range of 10% by weight to 95% by weight.

19. The negative electrode active material for lithium ion secondary batteries according to Claim 16 or 17,
wherein the negative electrode active material for lithium ion secondary batteries is spherical.

20. The negative electrode active material for lithium ion secondary batteries according to Claim 16 or 17,
wherein an average particle diameter of the negative electrode active material for lithium ion secondary batteries is 20 µm or less.

21. The negative electrode active material for lithium ion secondary batteries according to Claim 16 or 17,
wherein an average particle diameter of primary particles of the silicon oxide is in a range of 1 nm to 500 nm.

22. The negative electrode active material for lithium ion secondary batteries according to Claim 16 or 17,
wherein an average diameter of the voids on the cross-section of the negative electrode active material for lithium ion secondary batteries is in a range of 20 nm to 500 nm.

23. The negative electrode active material for lithium ion secondary batteries according to Claim 16 or 17,
wherein the composite particles are composite particles having an uneven structure on a surface, and a depth of the uneven structure is in a range of 20 nm to 500 nm.

24. A negative electrode compound for lithium ion secondary batteries, comprising:
the negative electrode active material for lithium ion secondary batteries according to Claim 16 or 17; and
a binder.

25. A negative electrode for lithium ion secondary batteries, comprising:
the negative electrode compound for lithium ion secondary batteries according to Claim 24.

26. A lithium ion secondary battery, comprising:
the negative electrode for lithium ion secondary batteries according to Claim 25.

27. A composition which has not yet been thermally treated and is used to form a carbon composite for negative electrode materials of lithium ion secondary batteries, comprising:
silica particles; and
a phenol resin,
wherein, when an actual carbon ratio of the thermally-treated phenol resin is represented by A% by weight, a content of the silica particles with respect to a total weight of the silica particles and the phenol resin is in a range of 100A/(100+A)% by weight to 4900A/(100+49A)% by weight.

28. The composition according to Claim 27,
wherein the actual carbon ratio of the thermally-treated phenol resin is in a range of 10% by weight to 40% by weight.

29. The composition according to Claim 27 or 28,
wherein an average particle diameter of the silica particles is in a range of 1 nm to 50 nm.

30. The composition according to Claim 27 or 28,
wherein the silica particles are colloidal silica.

31. The composition according to Claim 27 or 28,
wherein a content ratio of sodium ions extracted from the silica particles using ion chromatography is 5% by weight or less of all the silica particles.

32. The composition according to Claim 27 or 28,
wherein the phenol resin is a water-soluble phenol.

33. The composition according to Claim 27 or 28,
wherein the composition contains a void-forming agent.

34. The composition according to Claim 33,
wherein the void-forming agent is a copolymer particle.

35. The composition according to Claim 34,
wherein the copolymer particles are styrene butadiene rubber copolymer particles.

36. A carbon composite for negative electrode materials of lithium ion secondary batteries obtained by mixing and carrying out a thermal treatment on the composition according to Claim 27 or 28.

37. The carbon composite for negative electrode materials of lithium ion secondary batteries according to Claim 36,
wherein a mass ratio of SiOx (0<X<2) obtained by reducing the silica particles through the thermal treatment with respect to the carbon composite is in a range of 50% by weight to 98% by weight.

38. The carbon composite for negative electrode materials of lithium ion secondary batteries according to Claim 36 or 37,
wherein the carbon composite has voids.

39. The composition according to Claim 37,
wherein the content ratio of the sodium ions extracted from the carbon composite using ion chromatography is 5% by weight or less of the entire carbon composite.

40. A negative electrode compound for lithium ion secondary batteries, comprising:
the carbon composite for negative electrode materials of lithium ion secondary batteries according to Claim 37; and
a binder.

41. A negative electrode for lithium ion secondary batteries, comprising:
the negative electrode compound for lithium ion secondary batteries according to Claim 40.

42. A lithium ion secondary battery, comprising:
the negative electrode for lithium ion secondary batteries according to Claim 41.
